(19) Europäisches Patentamt
European Patent Office
Office européen des brevets

(11) **EP 1 547 267 B1**

(12) **EUROPEAN PATENT SPECIFICATION**

(45) Date of publication and mention
of the grant of the patent:
**25.04.2012   Bulletin 2012/17**

(51) Int Cl.:
**H04B 1/707** (2011.01)

(21) Application number: **03788911.0**

(22) Date of filing: **19.09.2003**

(86) International application number:
**PCT/EP2003/010428**

(87) International publication number:
**WO 2004/034595 (22.04.2004 Gazette 2004/17)**

(54) **SYSTEMS, METHODS OF OPERATING, AND COMPUTER PROGRAM PRODUCTS FOR SELECTING DELAYS FOR A RAKE RECEIVER BASED ON SIGNAL TO INTERFENCE RATIOS AND/OR POWERS**

SYSTEME, VERFAHREN ZUM BETRIEB UND COMPUTERPROGRAMMPRODUKTE ZUR AUSWAHL VON VERZÖGERUNGEN FÜR EINEN RAKE-EMPFÄNGER AUF DER BASIS VON SIGNAL/STÖRUNGS-VERHÄLTNISSEN UND/ODER LEISTUNGEN

SYSTEMES, PROCEDES DE FONCTIONNEMENT, ET PRODUITS PROGRAMMES INFORMATIQUES PERMETTANT DE SELECTIONNER DES RETARDS POUR UN RECEPTEUR RAKE EN FONCTION DE RAPPORTS SIGNAL SUR PARASITE ET/OU DE PUISSANCES

(84) Designated Contracting States:
**AT BE BG CH CY CZ DE DK EE ES FI FR GB GR HU IE IT LI LU MC NL PT RO SE SI SK TR**

(30) Priority: **23.09.2002   US 412899 P**
**27.06.2003   US 608241**

(43) Date of publication of application:
**29.06.2005   Bulletin 2005/26**

(73) Proprietor: **Telefonaktiebolaget LM Ericsson (publ)**
**164 83 Stockholm (SE)**

(72) Inventor: **JONSSON, Elias**
**S-211 29 Malmö (SE)**

(74) Representative: **Åkerman, Mårten Lennart et al**
**Ericsson AB**
**Patent Unit Mobile Platforms**
**221 83 Lund (SE)**

(56) References cited:
**EP-A- 1 065 795     GB-A- 2 366 970**
**US-A- 6 157 820**

**Description**

BACKGROUND OF THE INVENTION

The present invention relates to communication methods and electronic devices, and, more particularly, to spread spectrum communication methods and electronic devices.

Wireless communications systems are commonly used to provide voice and data communications to subscribers. For example, analog cellular radiotelephone systems, such as those designated AMPS, ETACS, NMT-450, and NMT-900, have long been deployed successfully throughout the world. Digital cellular radiotelephone systems such as those conforming to the North American standard IS-54 and the European standard GSM have been in service since the early 1990's. More recently, a wide variety of wireless digital services broadly labeled as PCS (Personal Communications Services) have been introduced, including advanced digital cellular systems conforming to standards such as IS-136 and IS-95, lower-power systems such as DECT (Digital Enhanced Cordless Telephone) and data communications services such as CDPD (Cellular Digital Packet Data). These and other systems are described in The Mobile Communications Handbook, edited by Gibson and published by CRC Press (1996).

Several types of access techniques are conventionally used to provide wireless services to users of wireless systems. Traditional analog cellular systems generally use a system referred to as Frequency Division Multiple Access (FDMA) to create communications channels, wherein discrete frequency bands serve as channels over which cellular terminals communicate with cellular base stations. Typically, these bands are reused in geographically separated cells in order to increase system capacity.

Modem digital wireless systems typically use different multiple access techniques such as Time Division Multiple Access (TDMA) and/or Code Division Multiple Access (CDMA) to provide increased spectral efficiency. In TDMA systems, such as those conforming to the GSM or IS-136 standards, carriers are divided into sequential time slots that are assigned to multiple channels such that a plurality of channels may be multiplexed on a single carrier. CDMA systems, such as those conforming to the IS-95 standard, achieve increased channel capacity by using "spread spectrum" techniques wherein a channel is defined by modulating a data-modulated carrier signal by a unique spreading code, i.e., a code that spreads an original data-modulated carrier over a wide portion of the frequency spectrum in which the communications system operates. The spreading code typically includes a sequence of "chips" occurring at a chip rate that is higher than the bit rate of the data being transmitted.

A so-called RAKE receiver structure is commonly used to recover information corresponding to one of the user data streams. In a typical RAKE receiver, a received composite signal is correlated with a particular spreading sequence assigned to the receiver to produce a plurality of time-offset correlations, a respective one of which corresponds to an echo of a transmitted spread spectrum signal. The correlations are then combined in a weighted fashion, i.e., respective correlations are multiplied by respective weighting factors and then summed to produce a decision statistic. The correlations generally are performed in a plurality of correlating fingers in the RAKE receiver, wherein each finger is synchronized with a channel path. The outputs of all fingers are combined to allow an improvement in the overall signal-to-noise ratio of the received signal. The design and operation of RAKE receivers are well known to those having skill in the art and need not be described further herein.

To maintain the RAKE receiver fingers synchronized with their respective channel paths, a path searcher may be used to support the RAKE receiver. The path searcher can continuously search for new channel paths and estimate their delays, These delays are then assigned to the RAKE fingers. For a wideband CDMA (WCDMA) system, the detection of the multi-path delays is typically done as a two-stage process: In the first stage, a wide search is done to identify the location of the multi-path delays. The resolution of this first search (i.e., the separation between the delays) is typically one chip or less. Typically, the received power or signal to interference ratio (SIR) is used as a criterion for the quality of the delayed signal. In the second stage, a localized search is performed over selected regions of delays. The resolution of this second search is typically one-half chip to an eighth of a chip. A decision is then made as to which delays to use for despreading the data based on the information from the localized search.

Unfortunately, it may be difficult to select which localized region of delays to monitor, to update the monitored delays, and to select the final delays used for despreading the data. One approach is to select the best delays (delays with the highest powers and/or SIRs) from the localized search and then to follow those delays as they fade and move in time. The best ones of these delays is then used for despreading the data. Unfortunately, clearly defined peaks may not be available when examining the power or SIR profile versus the delay. Complicated rules may, therefore, be needed to extract peaks out of a profile that contains few, if any, sharp peaks.

GB 2 366 970 discloses a RAKE receiver having a plurality of fingers arranged in parallel with their outputs being applied to an adder. The RAKE receiver includes means for measuring the average signal power for each finger over a period of about 10 ms for UMTS, and control means to control that finger to continue tracking its ray on the basis of the average signal power. The finger therefore continually processes the received signal and provides its output to the combiner also when the received power of a finger shortly dips below a level of a noise floor. This contribution to the RAKE receiver continues until the average signal level falls below the threshold, and the finger is then reallocated to receive and process another ray of the received signal.

SUMMARY OF THE INVENTION

The invention is defined by the appended independent claims

According to some embodiments of the present invention, delays for a RAKE receiver are selected by searching a plurality of multi-paths to select a set of multipath delays associated with the highest signal to interference ratios (SIRs) and/or power values. The respective SIR values and/or power values for the multi-path delays are averaged over a time interval . The multi-path delays, from the set of multi-path delays and a previous set of multi-path delays that have SIR values and/or power values greater than a threshold value are selected to generate a monitored set of multi-path delays. This selection may allow the total number of delays to be deduced. The SIR values and/or power values associated with the monitored set of multi-path delays are filtered and at least one multi-path delay from the monitored set of multi-path delays is eliminated as being correlated with another multi-path delay of the monitored set of multi-path delays to generate an output set of multi-path delays. The output set of multi-path delays is provided to a RAKE receiver.

Although described above primarily with respect to method aspects of the present invention, it will be understood that the present invention may be embodied as methods, systems, and/or computer program products.

BRIEF DESCRIPTION OF THE DRAWINGS

Other features of the present invention will be more readily understood from the following detailed description of specific embodiments thereof when read in conjunction with the accompanying drawings, in which:

FIG. 1 is a block diagram that illustrates a mobile terminal receiver in accordance with some embodiments of the present invention;
FIGS. 2, 3A, 3B, 4A, 4B, and 5 are flowcharts that illustrate operations for selecting delays for tuning the fingers of a RAKE receiver, in accordance with some embodiments of the present invention; and
FIG. 6 is a timeline that illustrates operations for selecting delays for tuning the fingers of a RAKE receiver, in accordance with some embodiments of the present invention.

DETAILED DESCRIPTION OF PREFERRED EMBODIMENTS

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the scope of the invention as defined by the claims. Like reference numbers signify like elements throughout the description of the figures. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof.

The present invention may be embodied as systems, e.g., electronic devices, methods, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The present invention is described herein in the context of selecting delays for a RAKE receiver in a mobile terminal receiver. It will be understood, however, that the present invention may be embodied in other types of electronic devices that incorporate a RAKE receiver. Moreover, as used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices. The present invention is also described herein in the context of selecting delays for a RAKE receiver based on signal to interference ratios (SIR). It will be understood, however, that, in accordance with some embodiments of the present invention, power values may be used in addition to or in place of the SIR values.

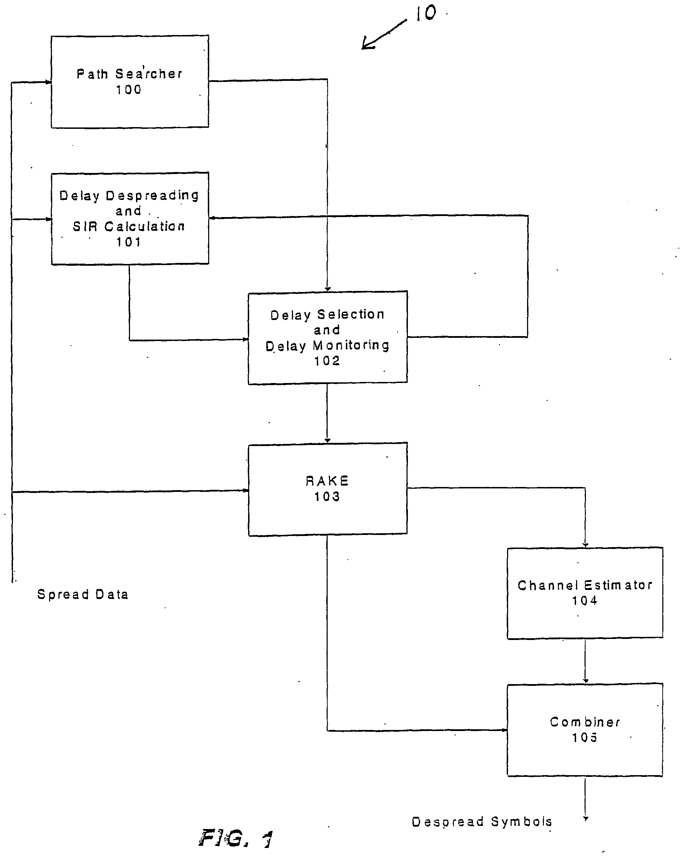

Referring now to **FIG.** 1, a mobile terminal receiver **10,** in accordance with some embodiments of the present invention, comprises a path searcher module 100, a delay despreading and signal to interference ratio (SIR) calculation module **101,** a delay selection and monitoring module **102,** a RAKE receiver module **103,** a channel estimator module **104,** and a combiner module **105** that are configured as shown. The path searcher module **100** is configured to conduct a wide search to find possible multi-path delays for active channels to be demodulated. Possible multi-path delays are generally characterized by large power values. Typically, the resolution of the search performed by the path searcher module **100** is on the order of one chip. The delay despreading and SIR calculation module **101** is configured to compute the SIR profile for the selected delays to be monitored and potential delays to be included in the SIR profile. The resolution of the delays processed by the delay despreading and SIR calculation module **101** is generally much finer than the resolution used by the path searcher module **100.** The delay selection and monitoring module **102** is configured to control when the path searcher module **100** performs a new search, to evaluate the possible new delays obtained from the path searcher, to determine when and how to update the SIR profile for the monitored delays, and to decide which delays to be provided to the RAKE receiver **103** for despreading an incoming signal containing spread data.

The RAKE receiver module **103** is configured to combine multi-path signals together so as to exploit channel diversity. The receiver module **103** is called a RAKE receiver because it "rakes" several multi-path contributions together. The RAKE receiver module **103** comprises a number of processing units or RAKE fingers. When demodulating a multi-path fading channel, each finger of the RAKE receiver is synchronized with one of the diverse propagation paths of the channel. A RAKE receiver comprising L fingers is able to detect L copies of the transmitted signal, which are corrected for time delays and added coherently. The resulting signal comprises a collection of several of the time-delayed copies of the transmitted signal. Generally, the RAKE receiver fingers are assigned to the strongest set of multi-path signals. As discussed above, the delay selection and monitoring module **102** determines which set of delays to use in tuning the fingers of the RAKE receiver.

The channel estimator module **104** is configured to estimate the channel gain and phase to produce traffic symbols, which are then provided to the combiner module **105,** which combines the traffic symbols to produce a despread, received signal.

Although **FIG. 1** illustrates an exemplary hardware and/or software architecture that may be used to select delays for tuning the fingers of a RAKE receiver, it will be understood that the present invention is not limited to such a configuration but is intended to encompass any configuration capable of carrying out the operations described herein. It will be further appreciated that the functionality of any or all of the processing modules of **FIG. 1** may also be implemented using discrete hardware components, one or more application specific integrated circuits (ASICs), or a programmed digital signal processor or microcontroller.

The present invention is described hereinafter with reference to flowchart and/or block diagram illustrations of methods, electronic devices, and computer program products in accordance with some embodiments of the invention. These flowchart and/or block diagrams further illustrate exemplary operations of the mobile terminal architecture of **FIG. 1.** It will be understood that each block of the flowchart and/or block diagram illustrations, and combinations of blocks in the flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart and/or block diagram block or blocks.

Before describing exemplary operations for selecting delays for tuning the fingers of a RAKE receiver, in accordance with some embodiments of the present invention, exemplary operations for selecting a subset of multi-path delays from a set of multi-path delays, for expanding the number of multi-path delays that are candidates for monitoring, and for reducing the SIR values for selected multi-path delays that are correlated to one another will be described first.

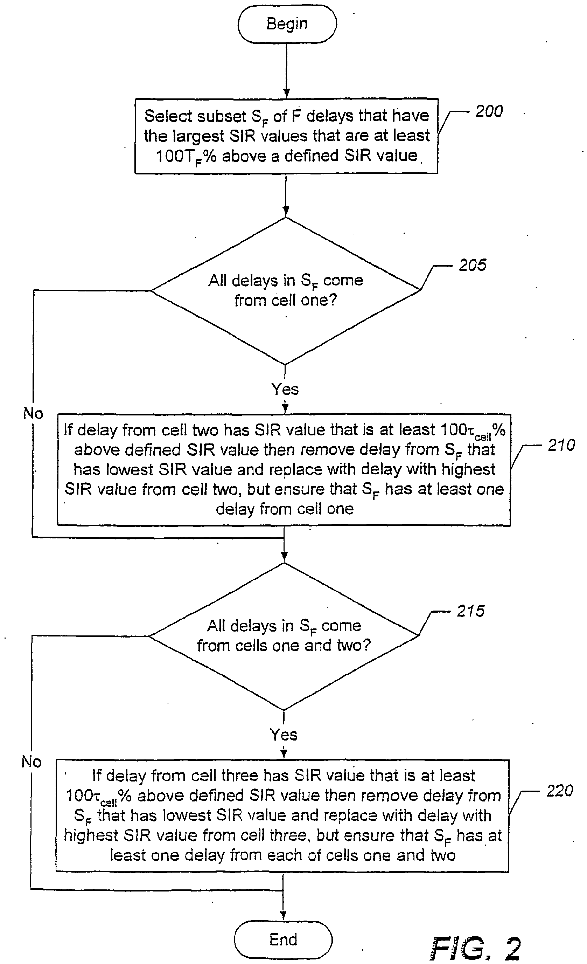

Referring now to **FIG. 2,** exemplary operations for selecting a subset of multipath delays from a set of multi-path delays, in accordance with some embodiments of the present invention, begin at block **200** where a subset $S_F$ of F multi-path delays having the largest SIR values that are at least $100\tau_F$% above a defined SIR value is selected from a set of multi-path delays. If the F multi-path delays come from a first wireless cell as determined at block **205,** then if a multi-path delay from a second wireless cell has an SIR value that is at least $100\tau_{Cell}$% above the defined SIR value, then the multi-path delay in $S_F$ that has the lowest SIR value is removed from $S_F$ and replaced with the multi-path delay with highest SIR value from cell two at block **210.** Verification is made, however, to ensure that the subset $S_F$ has at least one multi-path delay from cell one. This is done because the paths of cell two are uncorrelated with the paths from cell one and, therefore, a cell two multi-path may provide a valuable contribution in demodulating the multi-path signals.

At block **215,** a determination is made whether all of the F multi-path delays in $S_F$ come from cells one and two. If this is the case, then if a multi-path delay from a third wireless cell has an SIR value that is at least $100\tau_{cell}$% above the defined SIR value, then the multi-path delay in $S_F$ that has the lowest SIR value is removed from $S_F$ and replaced with the multi-path delay with highest SIR value from cell three at block **220.** Verification is made, however, to ensure that the subset $S_F$ has at least one multi-path delay from cells one and two. As will be understood by those skilled in the art, the operations described above may be extended to four or more cells

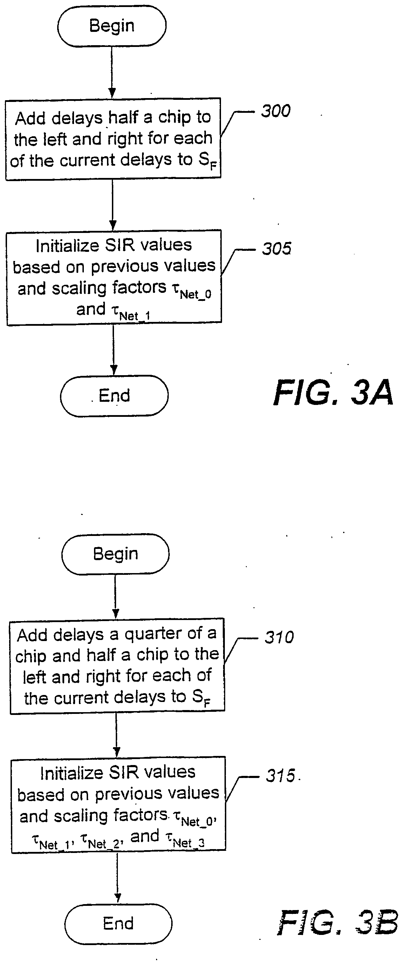

Referring now to **FIGS. 3A** and **3B,** exemplary operations for expanding the number of multi-path delays that are candidates for monitoring, in accordance with some embodiments of the present invention, will now be described. **FIG. 3A** illustrates exemplary operations for expanding the number of multi-path delays that are candidates for monitoring when the resolution of the SIR profile (set of multi-path delays and SIR values that are provided to the RAKE receiver **103)** is not significantly greater than the resolution of the path searcher module **100.** Operations begin at block **300** where multi-path delays half a chip to the left and right of the existing multi-path delays in the set $S_F$ are added to the set $S_F$. If the new multi-path delays do not have SIR values associated with a previous SIR profile, then the SIR values are initialized to $100\tau_{Net\_1}$% of the smallest SIR value of its left and right neighbors if both exist, or to $100\tau_{Net\_0}$% of either the left or right neighbor if only one neighbor exists at block **305.**

**FIG. 3B** illustrates exemplary operations for expanding the number of multipath delays that are candidates for monitoring when the resolution of the SIR profile is four or eight times the resolution of the path searcher module **100.** Operations for the case where the resolution of the SIR profile is four times the resolution of the path searcher module **100** begin at block **310** where multi-path delays a quarter of a chip and a half a chip to the left and right of the existing multi-path delays in the set $S_F$ are added to the set $S_F$. If the new multi-path delays do not have SIR values associated with a previous SIR profile, then the SIR values are initialized based on scaling factors $\tau Net\_0$, $\tau Net\_1$, $\tau_{Net\_2}$, $\tau_{Net\_3}$ at block **315** as follows: For multi-path delays a quarter chip away, the SIR values are initialized to $100\tau_{Net\_1}$% of the smallest SIR value of its left and right neighbors if both exist, or to $100\tau_{Net\_0}$% of either the left or right neighbor if only one neighbor exists. For multi-path delays a half chip away, the SIR values are initialized to $100\tau_{Net\_2}$% of the smallest SIR value of its left and right neighbors if both exist, or to $100\tau_{Net\_3}$% of either the left or right neighbor if only one neighbor exists.

It will be understood that the operations described above with respect to **FIGS. 3A** and **3B** can be extended to more general cases in accordance with some embodiments of the present invention.

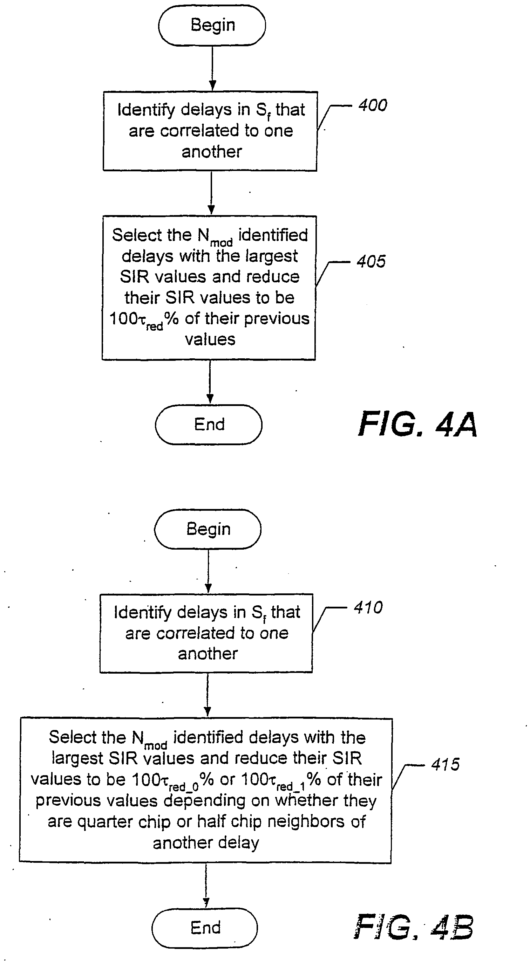

Referring now to **FIGS. 4A** and **4B,** exemplary operations for reducing the SIR values for selected multi-path delays that are correlated to one another, in accordance with some embodiments of the present invention, will now be described. **FIG. 4A** illustrates exemplary operations for reducing the SIR values for selected multi-path delays that are correlated to one another when the resolution of the SIR profile is not significantly greater than the resolution of the path searcher module **100.** Operations begin at block **400** where the multi-path delays in the set $S_F$ that are correlated with one another are identified. In accordance with some embodiments of the present invention, this may be done by selecting the multi-path delay having the largest SIR value and then tagging its neighbors within a half chip with the value N. Next, the multi-path delay with the second largest SIR value not already tagged by N is selected and its half chip neighbors are tagged with the value N. This procedure continues until all of the multi-path delays in the set $S_F$ have been examined. At block **405,** the $N_{mod}$ delays tagged by N and having the largest SIR values are scaled such that their SIR values are reduced to be $100\tau_{red}$% of their previous values. By reducing the importance of such correlated delays, other more uncorrelated delays are given priority, which may improve performance of the RAKE receiver **103.**

**FIG. 4B** illustrates exemplary operations for reducing the SIR values for selected multi-path delays that are correlated to one another when the resolution of the SIR profile is four or eight times the resolution of the path searcher module **100.** Operations for the case where the resolution of the SIR profile is four times the resolution of the path searcher module **100** begin at block **410** where the multi-path delays in the set $S_F$ that are correlated with one another are identified. In accordance with some embodiments of the present invention, this may be done by selecting the multi-path delay having the largest SIR value and then tagging its neighbors within a quarter chip with the value No and its neighbors between a quarter chip and half chip away with $N_1$. Next, the multi-path delay with the second largest SIR value not already tagged by No or $N_1$ is selected and its quarter chip and half chip neighbors are tagged as described above. This procedure continues until all of the multi-path delays in the set $S_F$ have been examined. At block **415,** the $N_{mod}$ delays tagged by No or $N_1$ and having the largest SIR values are scaled such that their SIR values of those delays tagged by No are reduced to be $100\tau_{red\_0}$% of their previous values and those delays tagged by $N_1$ are reduced to be $100\tau_{red\_1}$% of their previous values.

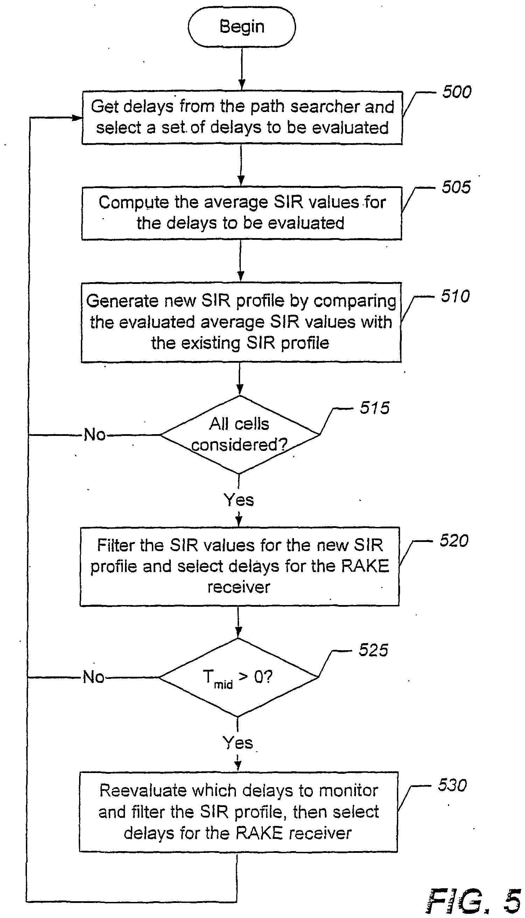

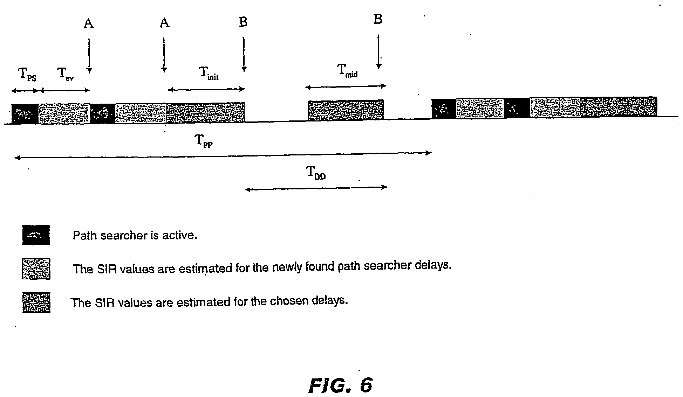

Referring now to **FIGS. 5** and **6,** exemplary operations for selecting delays for tuning the fingers of a RAKE receiver, in accordance with some embodiments of the present invention, will now be described. Operations begin at block 500 where multipath delays are obtained from the path searcher **100** and a set of delays to be evaluated is selected. In accordance some exemplary embodiments, a path search is performed over a period of $T_{PS}$ slots as shown in **FIG. 6** and $N_{ev}$ delays associated with the maximum SIR peaks are selected. The operations of **FIGS. 3A** or **3B** are then performed to expand the number of multi-path delays that are candidates for monitoring. The set of multi-path delays obtained after performing the operations of **FIGS. 3A** or **3B** is given by $S_{PS}$ and the multi-path delays in the current SIR profile is given by $S_B$.

At block **505,** the average SIR values for the set of multi-path delays $S_{PS}$ are computed over a period of $T_{ev}$ time slots. The average SIR value for a multi-path delay f is given by Equation 1, where $SIR_f^{(n)}$ is the instantaneous SIR value for sample n and $SIR^{(n)}{}_{filt,f}$ is its filtered counterpart, which is discussed in detail below:

$$SIR_{avg,f} = \frac{SIR_{filt,f}^{(n)} + \sum_{k=n+1}^{n+N_{ev}} SIR_f^{(k)}}{N_{ev} + 1} \qquad \text{EQ. 1}$$

At block **510,** the evaluated average SIR values are compared with the existing SIR profile to generate a new SIR profile at time point A shown in **FIG. 6.** In some embodiments, the averaged SIR values from block **505** are multiplied by a scaling factor p. This may allow older multi-path delays currently in the SIR profile to be given priority over newer multi-path delays. If the sets $S_{PS}$ and $S_B$ contain common multi-path delays, then the maximal SIR values are used for those paths as indicated by Equation 2:

$$SIR_{filt,f}^{(n)} = \max(SIR_{filt,f}^{(n)}, SIR_{avg,f}) \qquad \text{EQ. 2}$$

This reduces the likelihood that the multi-path delays that have already been incorporated into the SIR profile are moved out. The operations for reducing the SIR values for selected multi-path delays that are correlated to one another of **FIGS. 4A** and **4B** with $N_{mod} = N_{mod\_mon}$, $\tau_{red} = \tau_{red\_mon}$ or $\tau_{red\_0} = \tau_{red\_0\_mon}$, and $\tau_{red\_1} = \tau_{red\_1\_mon}$ are applied to the union of $S_{PS}$ and $S_B$ to create a temporary profile. The multi-path delay selection operations of **FIG. 2** with $\tau_F = \tau_{F\_mon}$ and $\tau_{Cell} = \tau_{Cell\_mon}$, and $F = F_{mon}$ are applied to the temporary profile to generate a set of multi-path delays used for delay monitoring. The operations of **FIGS. 3A** or **3B** are then performed (initialization is done using the original profile) to expand the number of multi-path delays that are candidates for monitoring to generate the resulting set of multi-path delays $S_B$. As indicated by block **515** and the two time points labeled A in **FIG. 6,** the operations of blocks **500, 505,** and **510** are repeated for all cells.

At block **520,** the SIR values for the set of multi-path delays $S_B$ for $T_{init}$ time slots are filtered using the filter parameter $\alpha_{init}$ according to Equation 3 below:

$$SIR_{filt,f}^{(n+1)} = \alpha_{init} SIR_{filt,f}^{(n)} + (1 - \alpha_{init}) SIR_f^{(n)} \qquad \text{EQ. 3}$$

The operations for reducing the SIR values for selected multi-path delays that are correlated to one another of **FIGS. 4A** and **4B** with $N_{mod} = N_{mod\_RAKE}$, $\tau_{red\_0} = \tau_{red\_0\_RAKE}$, and $\tau_{red\_1} = \tau_{red\_1\_RAKE}$ are then applied to the set of multi-path delays $S_B$ and stored as a temporary profile. This will alter the SIR profile such that if two delays are highly correlated, one of them is essentially dropped. The multi-path delay selection operations of **FIG. 2** with $F = F_{RAKE}$, $\tau_F = \tau_{F\_RAKE}$ and $\tau_{Cell} = \tau_{Cell\_RAKE}$ are applied to the temporary profile to generate a set of multi-path delays used for tuning the fingers of the RAKE receiver **103.**

At block **525** a determination is made whether any time exists between the end of the $T_{init}$ interval and the path searcher module **100** providing new multi-path delays. These time slots are labeled $T_{mid}$ on **FIG. 6.** If $T_{mid}$ is greater than zero slots, then at block **530** the operations for reducing the SIR values for selected multi-path delays that are correlated to one another of **FIGS. 4A** and **4B** with $N_{mod} = N_{mod\_mon}$, $\tau_{red} = \tau_{red\_mon}$ or $\tau_{red\_0} = \tau_{red\_0\_mon}$, and $\tau_{red\_1} = \tau_{red\_1\_mon}$ are applied to $S_B$ to create a temporary profile. The multi-path delay selection operations of **FIG. 2** with $\tau_F = \tau_{F\_mon}$ and $\tau_{Cell} = \tau_{Cell\_mon}$, and $F = F_{mon}$ are then applied to the set of multi-path delays $S_B$ in the temporary profile. The operations of **FIGS. 3A** or **3B** are then performed to expand the number of multi-path delays in the set $S_B$ that are candidates for monitoring. Initialization is done using the original profile. The operations of block **520** are then performed to filter the SIR values for the multi-path delays in the set $S_B$ using Equation 3. The end of the $T_{mid}$ time slots corresponds to the second instance of the label B on **FIG. 6.** The operations for reducing the SIR values for selected multi-path delays that are correlated to one another of **FIGS. 4A** and **4B** with $N_{mod} = N_{mod\_RAKE}$, $\tau_{red\_0} = \tau_{red\_0\_RAKE}$, and $\tau_{red\_1} = \tau_{red\_1\_RAKE}$ are then applied to the set of multi-path delays $S_B$ and stored as a temporary profile. This will alter the SIR profile such that if two delays are highly correlated, one of them is essentially dropped. The multi-path delay selection operations of **FIG. 2** with $F = F_{RAKE}$, $\tau_F = \tau_{F\_RAKE}$ and $\tau_{Cell} = \tau_{Cell\_RAKE}$ are applied to the temporary profile to generate a set of multi-path delays used for tuning the fingers of the RAKE receiver **103.** The operations of block **530** may be repeated multiple times before returning to block **500.**

The flowcharts of **FIGS. 2, 3A, 3B, 4A, 4B,** and **5** illustrate the architecture, functionality, and operations of embodiments of the mobile terminal receiver **10** of **FIG. 1** hardware and/or software. In this regard, each block represents a module, segment, or portion of code, which comprises one or more executable instructions for implementing the specified logical function(s). It should also be noted that in other implementations, the function(s) noted in the blocks may occur out of the order noted in **FIGS. 2, 3A, 3B, 4A, 4B,** and **5.** For example, two blocks shown in succession may, in fact, be executed substantially concurrently or the blocks may sometimes be executed in the reverse order, depending on the functionality involved.

TABLE 1 below includes a list of the parameters discussed above along with exemplary ranges for each parameter and a recommended value for each parameter in accordance with some embodiments of the present invention.

TABLE 1

| Parameter | Range | Recommended Value |
| --- | --- | --- |
| $F_{mon}$ | 8-30 | 15 |
| $F_{RAKE}$ | 5 - 15 | 10 |
| $\tau_{red\_RAKE}$ | 0 - 0.5 | .25 |
| $\tau_{red\_mon}$ | 0 - 0.5 | 0 |
| $\tau_{red\_0\_RAKE}$ | 0 - 0.5 | 0.15 |
| $\tau_{red\_0\_mon}$ | 0 - 0.5 | 0 |
| $\tau_{red\_1\_RAKE}$ | 0 - 0.5 | 0.25 |
| $\tau_{red\_1\_mon}$ | 0 - 0.5 | 0.1 |
| $\tau_{cell\_RAKE}$ | 0.1 - 1.0 | 0.2 |
| $\tau_{cell\_mon}$ | 0.1 - 1.0 | 0.2 |
| $\tau_{F\_RAKE}$ | 0-0.2 | 0.05 |
| $\tau_{F\_mon}$ | 0-0.2 | 0 |
| $N_{mod\_mon}$ | 0 - $F_{mon}$ | $F_{mon}$ |
| $N_{mod\_RAKE}$ | 0 - $F_{RAKE}$ | $F_{RAKE}$ |
| $\alpha_{init}$ | 0.5 - 1 | 0.985 |
| $N_{ev}$ | 1 - 25 | 15 |
| $T_{init}$ | 1-25 | 20 |
| $T_{mid}$ | 1-25 | 20 |

Many variations and modifications can be made to the preferred embodiments without substantially departing from the principles of the present invention. All such variations and modifications are intended to be included herein within the scope of the present invention, as set forth in the following claims.

**Claims**

1. A method of selecting delays for fingers of a RAKE receiver, comprising:

   • searching (500) a plurality of multi-paths to select a set of multi-path delays associated with the highest signal to interference ratios (SIRs) and/or power values;
   • averaging (505) the respective SIR values and/or power values for the multi-path delays over a time interval;
   • selecting (510) those multi-path delays from the set of multi-path delays and a previous set of multi-path delays that have SIR values and/or power values greater than a threshold value to generate a monitored set of multi-path delays;
   • filtering (520) the SIR values and/or power values associated with the monitored set of multi-path delays;
   • eliminating (530) at least one multi-path delay from the monitored set of multi-path delays as being correlated with another multipath delay of the monitored set of multi-path delays to generate an output set of multi-path delays; and
   • providing the output set of multi-path delays to a RAKE receiver.

2. The method of Claim 1, wherein the searching and averaging are performed for a plurality of different cells.

3. The method of Claim 1, wherein selecting those multi-path delays from the set of multi-path delays and the previous set of multi-path delays that have SIR values and/or power values greater than the threshold value comprises:

   • selecting those multi-path delays from the set of multi-path delays and the previous set of multi-path delays that have SIR values and/or power values greater than the threshold value such that the selected multi-path delays are associated with a plurality of cells.

4. The method of Claim 3, wherein the threshold value is a first threshold value, and wherein selecting those multi-path delays from the set of multi-path delays and the previous set of multi-path delays that have SIR values and/or power values greater than the first threshold value such that the selected multi-path delays are associated with the plurality of cells comprises:

   • replacing a (210) multi-path delay associated with a first cell that has a smallest SIR value and/or power value associated therewith with a multipath delay associated with a second cell that has an SIR value and/or power value greater than a second threshold value.

5. The method of Claim 1, further comprising:

   • expanding (300) the monitored set of multi-path delays by adding multipath delays to the monitored set of multi-path delays that are within a half chip of existing ones of the monitored set of multi-path delays.

6. The method of Claim 5, further comprising:

   • initializing (305) the SIR values and/or power values for those multi-path delays added to the monitored set of multi-path delays while expanding based on SIR values and/or power values associated with the previous set of multi-path delays.

7. The method of Claim 5, further comprising:

   • initializing (305) the SIR values and/or power values for those multi-path delays added to the monitored set of multi-path delays while expanding by using a first scaling factor for respective ones of those added multipath delays that have both left and right neighbor multi-path delays and by using a second scaling factor for respective ones of those added multipath delays that have only a left or right neighbor multi-path delay.

8. The method of Claim 5, further comprising:

   • initializing (315) the SIR values and/or power values for those multi-path delays added to the monitored set of multi-path delays while expanding by using a first scaling factor for respective ones of those added multipath delays that have both left and right neighbor multi-path delays and are within a quarter chip of an existing one of the multi-path delays, using a second scaling factor for respective ones of those added multi-path delays that have only a left or right neighbor multi-path delay and are within a quarter chip of an existing one of the multi-path delays, using a third scaling factor for respective ones of those added multi-path delays that have both left and right neighbor multi-path delays and are between a quarter chip and a half chip away from an existing one of the multi-path delays, and using a fourth scaling factor for respective ones of those added multi-path delays that have only a left or right neighbor multi-path delay and are between a quarter chip and a half chip away from an existing one of the multi-path delays.

9. The method of Claim 1, wherein eliminating the at least one multi-path delay from the monitored set of multi-path delays comprises:

   • reducing (405) SIR values and/or power values associated with selected ones of the monitored set of multi-path delays based on their correlation with other ones of the monitored set of multi-path delays; and
   • eliminating those multi-path delays from the monitored set of multi-path delays that have SIR values and/or power values less than the threshold value.

10. The method of Claim 1, wherein the monitored set of multi-path delays is a first monitored set of multi-path delays, the threshold value is a first threshold value, the output set of multi-path delays is a first output set of multi-path delays, and wherein the method further comprises:

   • selecting (510) those multi-path delays from the output set of multi-path delays that have SIR values and/or power values greater than the first threshold value to generate a second monitored set of multi-path delays;
   • expanding (300) the second monitored set of multi-path delays by adding multi-path delays to the second monitored set of multi-path delays that are within a half chip of existing ones of the second monitored set of multi-path delays;
   • filtering (520) the SIR values and/or power values associated with the second monitored set of multi-path delays;
   • selecting those multi-path delays from the second monitored set of multipath delays that have SIR values and/or power values greater than a second threshold value to generate a third monitored set of multi-path delays;
   • eliminating (530)_at least one multi-path delay from the third monitored set of multi-path delays as being correlated with another multi-path delay of the third monitored set of multi-path delays to generate a fourth monitored set of multi-path delays;
   • selecting those multi-path delays from the fourth monitored set of multipath delays that have SIR values greater than the second threshold value to generate an output set of multi-path delays; and
   • providing the second output set of multi-path delays to a RAKE receiver.

11. The method of Claim 1, further comprising:

   • multiplying the averaged SIR values and/or power values by a scaling factor so as to reduce the averaged SIR values and/or power values before selecting those multi-path delays from the set of multi-path delays and the previous set of multi-path delays that have SIR values and/or power values greater than the threshold value to generate the monitored set of multi-path delays.

12. The method of Claim 1, wherein selecting those multi-path delays from the set of multi-path delays and the previous set of multi-path delays that have SIR values and/or power values greater than the threshold value to generate the monitored set of multi-path delays comprises:

   • determining if the set of multi-path delays and the previous set of multipath delays includes any common multi-path delays; and
   • associating with respective ones of the common multi-path delays a maximum SIR value and/or power value of the SIR value and/or power value associated with respective ones of the common multi-path delays in the set of multi-path delays and the SIR value and/or power value associated with respective ones of the common multi-path delays in the previous set of multi-path delays.

13. A system for selecting delays for fingers of a RAKE receiver, comprising:

   • means (100) for searching a plurality of multi-paths to select a set of multi-path delays associated with the highest signal to interference ratios (SIRS) and/or power values;
• means (101) for averaging the respective SIR values and/or power values for the multi-path delays over a time interval;
• means (102) for selecting those multi-path delays from the set of multipath delays and a previous set of multi-path delays that have SIR values and/or power values greater than a threshold value to generate a monitored set of multi-path delays;
• means (102) for filtering the SIR values and/or power values associated with the monitored set of multi-path delays;
• means (102) for eliminating at least one multi-path delay from the monitored set of multi-path delays as being correlated with another multi-path delay of the monitored set of multi-path delays to generate an output set of multi-path delays; and
• means for providing the output set of multi-path delays to a RAKE receiver.

14. The system of Claim 13, wherein the means for selecting those multi-path delays from the set of multi-path delays and the previous set of multi-path delays that have SIR values and/or power values greater than the threshold value comprises:

• means for selecting those multi-path delays from the set of multi-path delays and the previous set of multi-path delays that have SIR values and/or power values greater than the threshold value such that the selected multi-path delays are associated with a plurality of cells.

15. The system of Claim 13, wherein the threshold value is a first threshold value, and wherein the means for selecting those multi-path delays from the set of multi-path delays and the previous set of multipath delays that have SIR values and/or power values greater than the first threshold value such that the selected multi-path delays are associated with the plurality of cells comprises:

• means for replacing a multi-path delay associated with a first cell that has a smallest SIR value and/or power value associated therewith with a multi-path delay associated with a second cell that has an SIR value and/or power value greater than a second threshold value.

16. The system of Claim 13, further comprising:

• means for expanding the monitored set of multi-path delays by adding multi-path delays to the monitored set of multi-path delays that are within a half chip of existing ones of the monitored set of multi-path delays.

17. The system of Claim 16, further comprising:

• means for initializing the SIR values and/or power values for those multipath delays added to the monitored set of multi-path delays while expanding based on SIR values and/or power values associated with the previous set of multi-path delays.

18. The system of Claim 16, further comprising:

• means for initializing the SIR values and/or power values for those multipath delays added to the monitored set of multi-path delays while expanding by using a first scaling factor for respective ones of those added multi-path delays that have both left and right neighbor multi-path delays and by using a second scaling factor for respective ones of those added multi-path delays that have only a left or right neighbor multi-path delay.

19. The system of Claim 16, further comprising:

• means for initializing the SIR values and/or power values for those multipath delays added to the monitored set of multi-path delays while expanding by using a first scaling factor for respective ones of those added multi-path delays that have both left and right neighbor multi-path delays and are within a quarter chip of an existing one of the multi-path delays, using a second scaling factor for respective ones of those added multipath delays that have only a left or right neighbor multi-path delay and are within a quarter chip of an existing one of the multi-path delays, using a third scaling factor for respective ones of those added multi-path delays that have both left and right neighbor multi-path delays and are between a quarter chip and a half chip away from an existing one of the multi-path delays, and using a fourth scaling factor for respective ones of those added multi-path delays that have only a left or right neighbor multi-path delay and are between a quarter chip and a half chip away from an existing one of the multi-path delays.

20. The system of Claim 13, wherein the means for eliminating the at least one multi-path delay from the monitored set of multi-path delays comprises:

• means for reducing SIR values and/or power values associated with selected ones of the monitored set of multi-path delays based on their correlation with other ones of the monitored set of multi-path delays; and
• means for eliminating those multi-path delays from the monitored set of multi-path delays that have SIR values and/or power values less than the threshold value.

21. The system of Claim 13, wherein the monitored set of multi-path delays is a first monitored set of multi-path delays, the threshold value is a first threshold value, the output set of multi-path delays is a first output set of multi-path delays, and wherein the system further comprises:

• means for selecting those multi-path delays from the output set of multipath delays that have SIR values and/or power values greater than the first threshold value to generate a second monitored set of multi-path delays;
• means for expanding the second monitored set of multi-path delays by adding multi-path delays to the second monitored set of multi-path delays that are within a half chip of existing ones of the second monitored set of multi-path delays;
• means for filtering the SIR values and/or power values associated with the second monitored set of multi-path delays;
• means for selecting those multi-path delays from the second monitored set of multi-path delays that have SIR values and/or power values greater than a second threshold value to generate a third monitored set of multipath delays;
• means for eliminating at least one multi-path delay from the third monitored set of multi-path delays as being correlated with another multi-path delay of the third monitored set of multi-path delays to generate a fourth monitored set of multi-path delays;
• means for selecting those multi-path delays from the fourth monitored set of multi-path delays that have SIR values and/or power values greater than the second threshold value to generate an output set of multi-path delays; and
• means for providing the second output set of multi-path delays to a RAKE receiver.

22. The system of Claim 13, further comprising:

• means for multiplying the averaged SIR values and/or power values by a scaling factor so as to reduce the averaged SIR values and/or power values before selecting those multi-path delays from the set of multi-path delays and the previous set of multi-path delays that have SIR values and/or power values greater than the threshold value to generate the monitored set of multi-path delays.

23. The system of Claim 13, wherein the means for selecting those multi-path delays from the set of multi-path delays and the previous set of multi-path delays that have SIR values and/or power values greater than the threshold value to generate the monitored set of multi-path delays comprises:

• means for determining if the set of multi-path delays and the previous set of multi-path delays includes any common multi-path delays; and
• means for associating with respective ones of the common multi-path delays a maximum SIR value and/or power value of the SIR value and/or power value associated with respective ones of the common multi-path delays in the set of multi-path delays and the SIR value and/or power value associated with respective ones of the common multi-path delays in the previous set of multi-path delays.

24. A computer program product for selecting delays for fingers of a RAKE receiver, comprising:

• a computer readable storage medium having computer readable program code embodied therein, the computer readable program code comprising:
• computer readable program code configured to search a plurality of multi-paths to select a set of multi-path delays associated with the highest signal to interference ratios (SIRs) and/or power values;
• computer readable program code configured to average the respective SIR values and/or power values for the multi-path delays over a time interval;
• computer readable program code configured to select those multi-path delays from the set of multi-path delays and a previous set of multi-path delays that have SIR values and/or power values greater than a threshold value to generate a monitored set of multi-path delays;
• computer readable program code configured to filter the SIR values and/or power values associated with the monitored set of multi-path delays;
• computer readable program code configured to eliminate at least one multi-path delay from the monitored set of multi-path delays as being correlated with another multi-path delay of the monitored set of multi-path delays to generate an output set of multi-path delays; and
• computer readable program code configured to provide the output set of multi-path delays to a RAKE receiver.

25. The computer program product of Claim 24, wherein the computer readable program code configured to select those multi-path delays from the set of multipath delays and the previous set of multi-path delays that have SIR values and/or power values greater than the threshold value comprises:

• computer readable program code configured to select those multi-path delays from the set of multi-path delays and the previous set of multi-path delays that have SIR values and/or power values greater than the threshold value such that the selected multi-path delays are associated with a plurality of cells.

26. The computer program product of Claim 24, wherein the threshold value is a first threshold value, and wherein the computer readable program code configured to select those multi-path delays from the set of multi-path delays and the previous set of multi-path delays that have SIR values and/or power values greater than the first threshold value such that the selected multi-path delays are associated with the plurality of cells comprises:

• computer readable program code configured to replace a multi-path delay associated with a first cell that has a smallest SIR value and/or power value associated therewith with a multi-path delay associated with a second cell that has an SIR value and/or power value greater than a second threshold value.

27. The computer program product of Claim 24, further comprising:

• computer readable program code configured to expand the monitored set of multi-path delays by adding multi-path delays to the monitored set of multi-path delays that are within a half chip of existing ones of the monitored set of multi-path delays.

28. The computer program product of Claim 27, further comprising:

• computer readable program code configured to initialize the SIR values and/or power values for those multi-path delays added to the monitored set of multi-path delays while expanding based on SIR values and/or power values associated with the previous set of multi-path delays.

29. The computer program product of Claim 27, further comprising:

• computer readable program code configured to initialize the SIR values and/or power values for those multi-path delays added to the monitored set of multi-path delays while expanding by using a first scaling factor for respective ones of those added multi-path delays that have both left and right neighbor multi-path delays and by using a second scaling factor for respective ones of those added multi-path delays that have only a left or right neighbor multi-path delay.

30. The computer program product of Claim 27, further comprising:

• computer readable program code configured to initialize the SIR values and/or power values for those multi-path delays added to the monitored set of multi-path delays while expanding by using a first scaling factor for respective ones of those added multi-path delays that have both left and right neighbor multi-path delays and are within a quarter chip of an existing one of the multi-path delays, using a second scaling factor for respective ones of those added multi-path delays that have only a left or right neighbor multi-path delay and are within a quarter chip of an existing one of the multi-path delays, using a third scaling factor for respective ones of those added multi-path delays that have both left and right neighbor multipath delays and are between a quarter chip and a half chip away from an existing one of the multi-path delays, and using a fourth scaling factor for respective ones of those added multi-path delays that have only a left or right neighbor multi-path delay and are between a quarter chip and a half chip away from an existing one of the multi-path delays.

31. The computer program product of Claim 24, wherein the computer readable program code configured to eliminate the at least one multi-path delay from the monitored set of multi-path delays comprises:

   • computer readable program code configured to reduce SIR values and/or power values associated with selected ones of the monitored set of multipath delays based on their correlation with other ones of the monitored set of multi-path delays; and
   • computer readable program code configured to eliminate those multi-path delays from the monitored set of multi-path delays that have SIR values and/or power values less than the threshold value.

32. The computer program product of Claim 24, wherein the monitored set of multi-path delays is a first monitored set of multi-path delays, the threshold value is a first threshold value, the output set of multi-path delays is a first output set of multi-path delays, and wherein the system further comprises:

   • computer readable program code configured to select those multi-path delays from the output set of multi-path delays that have SIR values and/or power values greater than the first threshold value to generate a second monitored set of multi-path delays;
   • computer readable program code configured to expand the second monitored set of multi-path delays by adding multi-path delays to the second monitored set of multi-path delays that are within a half chip of existing ones of the second monitored set of multi-path delays;
   • computer readable program code configured to filter the SIR values and/or power values associated with the second monitored set of multipath delays;
   • computer readable program code configured to select those multi-path delays from the second monitored set of multi-path delays that have SIR values and/or power values greater than a second threshold value to generate a third monitored set of multi-path delays;
   • computer readable program code configured to eliminate at least one multi-path delay from the third monitored set of multi-path delays as being correlated with another multi-path delay of the third monitored set of multi-path delays to generate a fourth monitored set of multi-path delays;
   • computer readable program code configured to select those multi-path delays from the fourth monitored set of multi-path delays that have SIR values and/or power values greater than the second threshold value to generate an output set of multi-path delays; and
   • computer readable program code configured to provide the second output set of multi-path delays to a RAKE receiver.

33. The computer program product of Claim 24, further comprising:

   • computer readable program code configured to multiply the averaged SIR values and/or power values by a scaling factor so as to reduce the averaged SIR values and/or power values before selecting those multi-path delays from the set of multi-path delays and the previous set of multi-path delays that have SIR values and/or power values greater than the threshold value to generate the monitored set of multi-path delays.

34. The computer program product of Claim 24, wherein the computer readable program code configured to select those multi-path delays from the set of multipath delays and the previous set of multi-path delays that have SIR values and/or power values greater than the threshold value to generate the monitored set of multi-path delays comprises:

   • computer readable program code configured to determine if the set of multi-path delays and the previous set of multi-path delays includes any common multi-path delays; and
   • computer readable program code configured to associate with respective ones of the common multi-path delays a maximum SIR value and/or power value of the SIR value and/or power value associated with respective ones of the common multi-path delays in the set of multi-path delays and the SIR value and/or power value associated with respective ones of the common multi-path delays in the previous set of multi-path delays.

35. The system of Claim 13, comprising an electronic device, comprising:

   • a path searcher module (100) that is configured to search a plurality of multi-paths to select a set of multi-path delays associated with the highest signal to interference ratios (SIRs) and/or power values;
• a delay despreading and SIR calculation module (101) that is configured to average the respective SIR values and/or power values for the multipath delays over a time interval and to multiply the averaged SIR values and/or power values by a scaling factor so as to reduce the averaged SIR values and/or power values;
• a delay selection and monitoring module (102) that is configured to select those multi-path delays from the set of multi-path delays and a previous set of multi-path delays that have SIR values and/or power values greater than a threshold value to generate a monitored set of multi-path delays, to filter the SIR values and/or power values associated with the monitored set of multi-path delays; to eliminate at least one multi-path delay from the monitored set of multi-path delays as being correlated with another multi-path delay of the monitored set of multi-path delays to generate an output set of multi-path delays; and
• a RAKE receiver (103) having fingers tuned based on the output set of multi-path delays.

**Patentansprüche**

1.  Verfahren zum Auswählen von Verzögerungen für Finger eines RAKE-Empfängers, umfassend:

    - Suchen (500) einer Mehrzahl von Mehrwegen, um einen Satz von Mehrwegverzögerungen auszuwählen, die mit den höchsten Signal/Störungs-Verhältnissen (SIR) und/oder Leistungswerten assoziiert sind;
    - Mitteln (505) der jeweiligen SIR-Werte und/oder Leistungswerte für die Mehrwegverzögerungen über ein Zeitintervall;
    - Auswählen (510) jener Mehrwegverzögerungen aus dem Satz von Mehrwegverzögerungen und einem vorherigen Satz von Mehrwegverzögerungen, die SIR-Werte und/oder Leistungswerte aufweisen, die höher als ein Schwellenwert sind, um einen überwachten Satz von Mehrwegverzögerungen zu erzeugen;
    - Filtern (520) der SIR-Werte und/oder Leistungswerte, die mit dem überwachten Satz von Mehrwegverzögerungen assoziiert sind;
    - Eliminieren (530) mindestens einer Mehrwegverzögerung aus dem überwachten Satz von Mehrwegverzögerungen als mit einer anderen Mehrwegverzögerung des überwachten Satzes von Mehrwegverzögerungen korreliert, um einen Ausgabesatz von Mehrwegverzögerungen zu erzeugen; und
    - Bereitstellen des Ausgabesatzes von Mehrwegverzögerungen für einen RAKE-Empfänger.

2.  Verfahren nach Anspruch 1, wobei das Suchen und Mitteln für eine Mehrzahl von verschiedenen Zellen erfolgt.

3.  Verfahren nach Anspruch 1, wobei das Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, umfasst:

    - Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, derart dass die ausgewählten Mehrwegverzögerungen mit einer Mehrzahl von Zellen assoziiert sind.

4.  Verfahren nach Anspruch 3, wobei der Schwellenwert ein erster Schwellenwert ist, und wobei das Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als ein Schwellenwert sind, derart dass die ausgewählten Mehrwegverzögerungen mit der Mehrzahl von Zellen assoziiert sind, umfasst:

    - Ersetzen (210) einer Mehrwegverzögerung, die mit einer ersten Zelle assoziiert ist und einen niedrigsten SIR-Wert und/oder Leistungswert aufweist, der damit assoziiert ist, durch eine Mehrwegverzögerung, die mit einer zweiten Zelle assoziiert ist und einen SIR-Wert und/oder Leistungswert aufweist, der höher als ein zweiter Schwellenwert ist.

5.  Verfahren nach Anspruch 1, ferner umfassend:

    - Erweitern (300) des überwachten Satzes von Mehrwegverzögerungen durch Hinzufügen von Mehrwegverzögerungen zu dem überwachten Satz von Mehrwegverzögerungen, die innerhalb eines halben Chips von bestehenden des überwachten Satzes von Mehrwegverzögerungen sind.

**6.** Verfahren nach Anspruch 5, ferner umfassend:

- Initialisieren (305) der SIR-Werte und/oder Leistungswerte für jene Mehrwegverzögerungen, die zu dem überwachten Satz von Mehrwegverzögerungen hinzugefügt werden, während des Erweiterns auf der Basis von SIR-Werten und/oder Leistungswerten, die mit dem vorherigen Satz von Mehrwegverzögerungen assoziiert sind.

**7.** Verfahren nach Anspruch 5, ferner umfassend:

- Initialisieren (305) der SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen, und durch Verwenden eines zweiten Skalierungsfaktors für jeweilige von jenen hinzugefügten Mehrwegverzögerungen, die nur eine linke oder rechte Nachbar-Mehrwegverzögerung aufweisen.

**8.** Verfahren nach Anspruch 5, ferner umfassend:

- Initialisieren (315) der SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen und innerhalb eines Viertelchips einer bestehenden der Mehrwegverzögerungen sind, Verwenden eines zweiten Skalierungsfaktors für jeweilige von jenen hinzugefügten Mehrwegverzögerungen, die nur eine linke oder rechte Nach-Mehrwegverzögerung aufweisen und innerhalb eines Viertelchips einer bestehenden der Mehrwegverzögerungen sind, Verwenden eines dritten Skalierungsfaktors für jeweilige von jenen hinzugefügten Mehrwegverzögerungen, die sowohl linke und rechte Nachbar-Mehrwegverzögerungen aufweisen und zwischen einem Viertelchip und einem halben Chip von einer bestehenden der Mehrwegverzögerungen entfernt sind, und Verwenden eines vierten Skalierungsfaktors für jeweilige von jenen hinzugefügten Mehrwegverzögerungen, die nur eine linke oder rechte Nachbar-Mehrwegverzögerungen aufweisen und zwischen einem Viertelchip und einem halben Chip von einer bestehenden der Mehrwegverzögerungen entfernt sind.

**9.** Verfahren nach Anspruch 1, wobei das Eliminieren der mindestens einen Mehrwegverzögerung aus dem überwachten Satz von Mehrwegverzögerungen umfasst:

- Reduzieren (405) von SIR-Werten und/oder Leistungswerten, die mit ausgewählten des überwachten Satzes von Mehrwegverzögerungen assoziiert sind, auf der Basis ihrer Korrelation mit anderen des überwachten Satzes von Mehrwegverzögerungen; und
- Eliminieren jener Mehrwegverzögerungen aus dem überwachten Satz von Mehrwegverzögerungen, die SIR-Werte und/oder Leistungswerte aufweisen, die niedriger als der Schwellenwert sind.

**10.** Verfahren nach Anspruch 1, wobei der überwachte Satz von Mehrwegverzögerungen ein erster überwachter Satz von Mehrwegverzögerungen ist, der Schwellenwert ein erster Schwellenwert ist, der Ausgabesatz von Mehrwegverzögerungen ein erster Ausgabesatz von Mehrwegverzögerungen ist, und wobei das Verfahren ferner umfasst:

- Auswählen (510) jener Mehrwegverzögerungen aus dem Ausgabesatz von Mehrwegverzögerungen, die SIR-Werte und/oder Leistungswerte aufweisen, die höher als der erste Schwellenwert sind, um einen zweiten überwachten Satz von Mehrwegverzögerungen zu erzeugen;
- Erweitern (300) des zweiten überwachten Satzes von Mehrwegverzögerungen durch Hinzufügen von Mehrwegverzögerungen zu dem zweiten überwachten Satz von Mehrwegverzögerungen, die innerhalb eines halben Chips von bestehenden des zweiten überwachten Satzes von Mehrwegverzögerungen sind;
- Filtern (520) der SIR-Werte und/oder Leistungswerte, die mit dem zweiten überwachten Satz von Mehrwegverzögerungen assoziiert sind;
- Auswählen jener Mehrwegverzögerungen aus dem zweiten überwachten Satz von Mehrwegverzögerungen, die SIR-Werte und/oder Leistungswerte aufweisen, die höher als ein zweiter Schwellenwert sind, um einen dritten überwachten Satz von Mehrwegverzögerungen zu erzeugen;
- Eliminieren (530) mindestens einer Mehrwegverzögerung aus dem dritten überwachten Satz von Mehrwegverzögerungen als mit einer anderen Mehrwegverzögerung des dritten überwachten Satzes von Mehrwegverzögerungen korreliert, um einen vierten überwachten Satz von Mehrwegverzögerungen zu erzeugen;
- Auswählen jener Mehrwegverzögerungen aus dem vierten überwachten Satz von Mehrwegverzögerungen, die SIR-Werte und/oder Leistungswerte aufweisen, die höher als der zweite Schwellenwert sind, um einen Ausgabesatz von Mehrwegverzögerungen zu erzeugen; und
- Bereitstellen des zweiten Ausgabesatzes von Mehrwegverzögerungen für einen RAKE-Empfänger.

**11.** Verfahren nach Anspruch 1, ferner umfassend:

- Multiplizieren der gemittelten SIR-Werte und/oder Leistungswerte mit einem Skalierungsfaktor, um die gemittelten SIR-Werte und/oder Leistungswerte vor dem Auswählen jener Mehrwegverzögerungen aus dem Satz von Mehrwegverzögerungen und dem vorherigen Satz von Mehrwegverzögerungen zu reduzieren, die SIR-Werte und/oder Leistungswerte aufweisen, die höher als der Schwellenwert sind, um den überwachten Satz von Mehrwegverzögerungen zu erzeugen.

**12.** Verfahren nach Anspruch 1, wobei das Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, um den überwachten Satz von Mehrwegverzögerungen zu erzeugen, umfasst:

- Bestimmen, ob der Satz von Mehrwegverzögerungen und der vorherige Satz von Mehrwegverzögerungen irgendwelche gemeinsame Mehrwegverzögerungen umfassen; und
- Assoziieren mit jeweiligen der gemeinsamen Mehrwegverzögerungen eines maximalen SIR-Werts und/oder Leistungswerts des SIR-Werts und/oder Leistungswerts, der mit jeweiligen der gemeinsamen Mehrwegverzögerungen im Satz von Mehrwegverzögerungen assoziiert ist, und des SIR-Werts und/oder Leistungswerts, der mit jeweiligen der gemeinsamen Mehrwegverzögerungen im vorherigen Satz von Mehrwegverzögerungen assoziiert ist.

**13.** System zum Auswählen von Verzögerungen für Finger eines RAKE-Empfängers, umfassend:

- Mittel (100) zum Suchen einer Mehrzahl von Mehrwegen, um einen Satz von Mehrwegverzögerungen auszuwählen, die mit den höchsten Signal/Störungs-Verhältnissen (SIR) und/oder Leistungswerten assoziiert sind;
- Mittel (101) zum Mitteln der jeweiligen SIR-Werte und/oder Leistungswerte für die Mehrwegverzögerungen über ein Zeitintervall;
- Mittel (102) zum Auswählen jener Mehrwegverzögerungen aus dem Satz von Mehrwegverzögerungen und einem vorherigen Satz von Mehrwegverzögerungen, die SIR-Werte und/oder Leistungswerte aufweisen, die höher als ein Schwellenwert sind, um einen überwachten Satz von Mehrwegverzögerungen zu erzeugen;
- Mittel (102) zum Filtern der SIR-Werte und/oder Leistungswerte, die mit dem überwachten Satz von Mehrwegverzögerungen assoziiert sind;
- Mittel (102) zum Eliminieren mindestens einer Mehrwegverzögerung aus dem überwachten Satz von Mehrwegverzögerungen als mit einer anderen Mehrwegverzögerung des überwachten Satzes von Mehrwegverzögerungen korreliert, um einen Ausgabesatz von Mehrwegverzögerungen zu erzeugen; und
- Mittel zum Bereitstellen des Ausgabesatzes von Mehrwegverzögerungen für einen RAKE-Empfänger.

**14.** System nach Anspruch 13, wobei das Mittel zum Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, umfasst:

- Mittel zum Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, derart dass die ausgewählten Mehrwegverzögerungen mit einer Mehrzahl von Zellen assoziiert sind.

**15.** System nach Anspruch 13, wobei der Schwellenwert ein erster Schwellenwert ist, und wobei das Mittel zum das Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, derart dass die ausgewählten Mehrwegverzögerungen mit einer Mehrzahl von Zellen assoziiert sind, umfasst:

- Mittel zum Ersetzen einer Mehrwegverzögerung, die mit einer ersten Zelle assoziiert ist und einen niedrigsten SIR-Wert und/oder Leistungswert aufweist, der damit assoziiert ist, durch eine Mehrwegverzögerung, die mit einer zweiten Zelle assoziiert ist und einen SIR-Wert und/oder Leistungswert aufweist, der höher als der zweite Schwellenwert ist.

**16.** System nach Anspruch 13, ferner umfassend:

- Mittel zum Erweitern des überwachten Satzes von Mehrwegverzögerungen durch Hinzufügen von Mehrwegverzögerungen zu dem überwachten Satz von Mehrwegverzögerungen, die innerhalb eines halben Chips von bestehenden des überwachten Satzes von Mehrwegverzögerungen sind.

**17.** System nach Anspruch 16, ferner umfassend:

- Mittel zum Initialisieren der SIR-Werte und/oder Leistungswerte für jene Mehrwegverzögerungen, die zu dem überwachten Satz von Mehrwegverzögerungen hinzugefügt werden, während des Erweiterns auf der Basis von SIR-Werten und/oder Leistungswerten, die mit dem vorherigen Satz von Mehrwegverzögerungen assoziiert sind.

**18.** System nach Anspruch 16, ferner umfassend:

- Mittel zum Initialisieren der SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen, und durch Verwenden eines zweiten Skalierungsfaktors für jeweilige von jenen hinzugefügten Mehrwegverzögerungen, die nur eine linke oder rechte Nachbar-Mehrwegverzögerung aufweisen.

**19.** System nach Anspruch 16, ferner umfassend:

- Mittel zum Initialisieren der SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen und innerhalb eines Viertelchips einer bestehenden der Mehrwegverzögerungen sind, Verwenden eines zweiten Skalierungsfaktors für jeweilige von jenen hinzugefügten Mehrwegverzögerungen, die nur eine linke oder rechte Nach-Mehrwegverzögerung aufweisen und innerhalb eines Viertelchips einer bestehenden der Mehrwegverzögerungen sind, Verwenden eines dritten Skalierungsfaktors für jeweilige von jenen hinzugefügten Mehrwegverzögerungen, die sowohl linke und rechte Nachbar-Mehrwegverzögerungen aufweisen und zwischen einem Viertelchip und einem halben Chip von einer bestehenden der Mehrwegverzögerungen entfernt sind, und Verwenden eines vierten Skalierungsfaktors für jeweilige von jenen hinzugefügten Mehrwegverzögerungen, die nur eine linke oder rechte Nachbar-Mehrwegverzögerungen aufweisen und zwischen einem Viertelchip und einem halben Chip von einer bestehenden der Mehrwegverzögerungen entfernt sind.

**20.** System nach Anspruch 13, wobei das Mittel zum Eliminieren der mindestens einen Mehrwegverzögerung aus dem überwachten Satz von Mehrwegverzögerungen umfasst:

- Mittel zum Reduzieren von SIR-Werten und/oder Leistungswerten, die mit ausgewählten des überwachten Satzes von Mehrwegverzögerungen assoziiert sind, auf der Basis ihrer Korrelation mit anderen des überwachten Satzes von Mehrwegverzögerungen; und
- Mittel zum Eliminieren jener Mehrwegverzögerungen aus dem überwachten Satz von Mehrwegverzögerungen, die SIR-Werte und/oder Leistungswerte aufweisen, die niedriger als der Schwellenwert sind.

**21.** System nach Anspruch 13, wobei der überwachte Satz von Mehrwegverzögerungen ein erster überwachter Satz von Mehrwegverzögerungen ist, der Schwellenwert ein erster Schwellenwert ist, der Ausgabesatz von Mehrwegverzögerungen ein erster Ausgabesatz von Mehrwegverzögerungen ist, und wobei das System ferner umfasst:

- Mittel zum Auswählen jener Mehrwegverzögerungen aus dem Ausgabesatz von Mehrwegverzögerungen, die SIR-Werte und/oder Leistungswerte aufweisen, die höher als der erste Schwellenwert sind, um einen zweiten überwachten Satz von Mehrwegverzögerungen zu erzeugen;

- Mittel zum Erweitern des zweiten überwachten Satzes von Mehrwegverzögerungen durch Hinzufügen von Mehrwegverzögerungen zu dem zweiten überwachten Satz von Mehrwegverzögerungen, die innerhalb eines halben Chips von bestehenden des zweiten überwachten Satzes von Mehrwegverzögerungen sind;
- Mittel zum Filtern der SIR-Werte und/oder Leistungswerte, die mit dem zweiten überwachten Satz von Mehrwegverzögerungen assoziiert sind;
- Mittel zum Auswählen jener Mehrwegverzögerungen aus dem zweiten überwachten Satz von Mehrwegverzögerungen, die SIR-Werte und/oder Leistungswerte aufweisen, die höher als ein zweiter Schwellenwert sind, um einen dritten überwachten Satz von Mehrwegverzögerungen zu erzeugen;
- Mittel zum Eliminieren mindestens einer Mehrwegverzögerung aus dem dritten überwachten Satz von Mehrwegverzögerungen als mit einer anderen Mehrwegverzögerung des dritten überwachten Satzes von Mehrwegverzögerungen korreliert, um einen vierten überwachten Satz von Mehrwegverzögerungen zu erzeugen;
- Mittel zum Auswählen jener Mehrwegverzögerungen aus dem vierten überwachten Satz von Mehrwegverzögerungen, die SIR-Werte und/oder Leistungswerte aufweisen, die höher als der zweite Schwellenwert sind, um einen Ausgabesatz von Mehrwegverzögerungen zu erzeugen; und
- Mittel zum Bereitstellen des zweiten Ausgabesatzes von Mehrwegverzögerungen für einen RAKE-Empfänger.

22. System nach Anspruch 13, ferner umfassend:

- Mittel zum Multiplizieren der gemittelten SIR-Werte und/oder Leistungswerte mit einem Skalierungsfaktor, um die gemittelten SIR-Werte und/oder Leistungswerte vor dem Auswählen jener Mehrwegverzögerungen aus dem Satz von Mehrwegverzögerungen und dem vorherigen Satz von Mehrwegverzögerungen zu reduzieren, die SIR-Werte und/oder Leistungswerte aufweisen, die höher als der Schwellenwert sind, um den überwachten Satz von Mehrwegverzögerungen zu erzeugen.

23. System nach Anspruch 13, wobei das Mittel zum Auswählen jener Mehrwegverzögerungen aus dem Satz von Mehrwegverzögerungen und dem vorherigen Satz von Mehrwegverzögerungen, die SIR-Werte und/oder Leistungswerte aufweisen, die höher als der Schwellenwert sind, um den überwachten Satz von Mehrwegverzögerungen zu erzeugen, umfasst:

- Mittel zum Bestimmen, ob der Satz von Mehrwegverzögerungen und der vorherige Satz von Mehrwegverzögerungen irgendwelche gemeinsame Mehrwegverzögerungen umfassen; und
- Mittel zum Assoziieren mit jeweiligen der gemeinsamen Mehrwegverzögerungen eines maximalen SIR-Werts und/oder Leistungswerts des SIR-Werts und/oder Leistungswerts, der mit jeweiligen der gemeinsamen Mehrwegverzögerungen im Satz von Mehrwegverzögerungen assoziiert ist, und des SIR-Werts und/oder Leistungswerts, der mit jeweiligen der gemeinsamen Mehrwegverzögerungen im vorherigen Satz von Mehrwegverzögerungen assoziiert ist.

24. Computerprogrammprodukt zum Auswählen von Verzögerungen für Finger eines RAKE-Empfängers, umfassend:

- ein computerlesbares Speichermedium, das computerlesbaren Programmcode darauf enthalten aufweist, wobei der computerlesbare Programmcode umfasst:
- computerlesbaren Programmcode, der so konfiguriert ist, dass er eine Mehrzahl von Mehrwegen sucht, um einen Satz von Mehrwegverzögerungen auszuwählen, die mit den höchsten Signal/Störungs-Verhältnissen (SIR) und/oder Leistungswerten assoziiert sind;
- computerlesbaren Programmcode, der so konfiguriert ist, dass er die jeweiligen SIR-Werte und/oder Leistungswerte für die Mehrwegverzögerungen über ein Zeitintervall mittelt;
- computerlesbaren Programmcode, der so konfiguriert ist, dass er jene Mehrwegverzögerungen aus dem Satz von Mehrwegverzögerungen und einem vorherigen Satz von Mehrwegverzögerungen auswählt, die SIR-Werte und/oder Leistungswerte aufweisen, die höher als ein Schwellenwert sind, um einen überwachten Satz von Mehrwegverzögerungen zu erzeugen;
- computerlesbaren Programmcode, der so konfiguriert ist, dass er die SIR-Werte und/oder Leistungswerte filtert, die mit dem überwachten Satz von Mehrwegverzögerungen assoziiert sind;
- computerlesbaren Programmcode, der so konfiguriert ist, dass er mindestens eine Mehrwegverzögerung als mit einer anderen Mehrwegverzögerung des überwachten Satzes von Mehrwegverzögerungen korreliert aus dem überwachten Satz von Mehrwegverzögerungen eliminiert, um einen Ausgabesatz von Mehrwegverzögerungen zu erzeugen; und
- computerlesbaren Programmcode, der so konfiguriert ist, dass er den Ausgabesatz von Mehrwegverzögerungen für einen RAKE-Empfänger bereitstellt.

**25.** Computerprogrammprodukt nach Anspruch 24, wobei der computerlesbare Programmcode, der so konfiguriert ist, dass er jene Mehrwegverzögerungen aus dem Satz von Mehrwegverzögerungen und dem vorherigen Satz von Mehrwegverzögerungen auswählt, die SIR-Werte und/oder Leistungswerte aufweisen, die höher als der Schwellenwert sind, umfasst:

- computerlesbaren Programmcode, der so konfiguriert ist, dass er jene Mehrwegverzögerungen aus dem Satz von Mehrwegverzögerungen und dem vorherigen Satz von Mehrwegverzögerungen auswählt, die SIR-Werte und/oder Leistungswerte aufweisen, die höher als der Schwellenwert sind, derart dass die ausgewählten Mehrwegverzögerungen mit einer Mehrzahl von Zellen assoziiert sind.

**26.** Computerprogrammprodukt nach Anspruch 24, wobei der Schwellenwert ein erster Schwellenwert ist, und wobei der computerlesbare Programmcode, der so konfiguriert ist, dass er jene Mehrwegverzögerungen aus dem Satz von Mehrwegverzögerungen und dem vorherigen Satz von Mehrwegverzögerungen auswählt, die SIR-Werte und/ oder Leistungswerte aufweisen, die höher als ein Schwellenwert sind, derart dass die ausgewählten Mehrwegverzögerungen mit einer Mehrzahl von Zellen assoziiert sind, umfasst:

- computerlesbaren Programmcode, der so konfiguriert ist, dass er eine Mehrwegverzögerung, die mit einer ersten Zelle assoziiert ist und einen niedrigsten SIR-Wert und/oder Leistungswert aufweist, der damit assoziiert ist, durch eine Mehrwegverzögerung ersetzt, die mit einer zweiten Zelle assoziiert ist und einen SIR-Wert und/ oder Leistungswert aufweist, der höher als ein zweiter Schwellenwert ist.

**27.** Computerprogrammprodukt nach Anspruch 24, ferner umfassend:

- computerlesbaren Programmcode, der so konfiguriert ist, dass er den überwachten Satz von Mehrwegverzögerungen durch Hinzufügen von Mehrwegverzögerungen zu dem überwachten Satz von Mehrwegverzögerungen erweitert, die innerhalb eines halben Chips von bestehenden des überwachten Satzes von Mehrwegverzögerungen sind.

**28.** Computerprogrammprodukt nach Anspruch 27, ferner umfassend:

- computerlesbaren Programmcode, der so konfiguriert ist, dass er die SIR-Werte und/oder Leistungswerte für jene Mehrwegverzögerungen, die zu dem überwachten Satz von Mehrwegverzögerungen hinzugefügt werden, während des Erweiterns auf der Basis von SIR-Werten und/oder Leistungswerten initialisiert, die mit dem vorherigen Satz von Mehrwegverzögerungen assoziiert sind.

**29.** Computerprogrammprodukt nach Anspruch 27, ferner umfassend:

- computerlesbaren Programmcode, der so konfiguriert ist, dass er die SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen, und durch Verwenden eines zweiten Skalierungsfaktors für jeweilige von jenen hinzugefügten Mehrwegverzögerungen initialisiert, die nur eine linke oder rechte Nachbar-Mehrwegverzögerung aufweisen.

**30.** Computerprogrammprodukt nach Anspruch 27, ferner umfassend:

- computerlesbaren Programmcode, der so konfiguriert ist, dass er die SIR-Werte und/oder Leistungswerte für jene Mehrwegverzögerungen, die zu dem überwachten Satz von Mehrwegverzögerungen hinzugefügt werden, während des Erweiterns durch Verwenden eines ersten Skalierungsfaktors für jeweilige von jenen hinzugefügten Mehrwegverzögerungen, die sowohl linke als auch rechte Nachbar-Mehrwegverzögerungen aufweisen und innerhalb eines Viertelchips einer bestehenden der Mehrwegverzögerungen sind, Verwenden eines zweiten Skalierungsfaktors für jeweilige von jenen hinzugefügten Mehrwegverzögerungen, die nur eine linke oder rechte Nach-Mehrwegverzögerung aufweisen und innerhalb eines Viertelchips einer bestehenden der Mehrwegverzögerungen sind, Verwenden eines dritten Skalierungsfaktors für jeweilige von jenen hinzugefügten Mehrwegverzögerungen, die sowohl linke und rechte Nachbar-Mehrwegverzögerungen aufweisen und zwischen einem Viertelchip und einem halben Chip von einer bestehenden der Mehrwegverzögerungen entfernt sind, und Verwenden eines vierten Skalierungsfaktors für jeweilige von jenen hinzugefügten Mehrwegverzögerungen initialisiert, die nur eine linke oder rechte Nachbar-Mehrwegverzögerungen aufweisen und zwischen einem Viertelchip und einem halben Chip von einer bestehenden der Mehrwegverzögerungen entfernt sind.

31. Computerprogrammprodukt nach Anspruch 24, wobei der computerlesbare Programmcode, der so konfiguriert ist, dass er die mindestens eine Mehrwegverzögerung aus dem überwachten Satz von Mehrwegverzögerungen eliminiert, umfasst:

- computerlesbaren Programmcode, der so konfiguriert ist, dass er SIR-Werte und/oder Leistungswerte, die mit ausgewählten des überwachten Satzes von Mehrwegverzögerungen assoziiert sind, auf der Basis ihrer Korrelation mit anderen des überwachten Satzes von Mehrwegverzögerungen reduziert; und
- computerlesbaren Programmcode, der so konfiguriert ist, dass er jene Mehrwegverzögerungen aus dem überwachten Satz von Mehrwegverzögerungen eliminiert, die SIR-Werte und/oder Leistungswerte aufweisen, die niedriger als der Schwellenwert sind.

32. Computerprogrammprodukt nach Anspruch 24, wobei der überwachte Satz von Mehrwegverzögerungen ein erster überwachter Satz von Mehrwegverzögerungen ist, der Schwellenwert ein erster Schwellenwert ist, der Ausgabesatz von Mehrwegverzögerungen ein erster Ausgabesatz von Mehrwegverzögerungen ist, und wobei das System ferner umfasst:

- computerlesbaren Programmcode, der so konfiguriert ist, dass er jene Mehrwegverzögerungen aus dem Ausgabesatz von Mehrwegverzögerungen auswählt, die SIR-Werte und/oder Leistungswerte aufweisen, die höher als der erste Schwellenwert sind, um einen zweiten überwachten Satz von Mehrwegverzögerungen zu erzeugen;
- computerlesbaren Programmcode, der so konfiguriert ist, dass er den zweiten überwachten Satz von Mehrwegverzögerungen durch Hinzufügen von Mehrwegverzögerungen zu dem zweiten überwachten Satz von Mehrwegverzögerungen erweitert, die innerhalb eines halben Chips von bestehenden des zweiten überwachten Satzes von Mehrwegverzögerungen sind;
- computerlesbaren Programmcode, der so konfiguriert ist, dass er die SIR-Werte und/oder Leistungswerte filtert, die mit dem zweiten überwachten Satz von Mehrwegverzögerungen assoziiert sind;
- computerlesbaren Programmcode, der so konfiguriert ist, dass er jene Mehrwegverzögerungen aus dem zweiten überwachten Satz von Mehrwegverzögerungen auswählt, die SIR-Werte und/oder Leistungswerte aufweisen, die höher als ein zweiter Schwellenwert sind, um einen dritten überwachten Satz von Mehrwegverzögerungen zu erzeugen;
- computerlesbaren Programmcode, der so konfiguriert ist, dass er mindestens eine Mehrwegverzögerung als mit einer anderen Mehrwegverzögerung des dritten überwachten Satzes von Mehrwegverzögerungen korreliert aus dem dritten überwachten Satz von Mehrwegverzögerungen eliminiert, um einen vierten überwachten Satz von Mehrwegverzögerungen zu erzeugen;
- computerlesbaren Programmcode, der so konfiguriert ist, dass er jene Mehrwegverzögerungen aus dem vierten überwachten Satz von Mehrwegverzögerungen auswählt, die SIR-Werte und/oder Leistungswerte aufweisen, die höher als der zweite Schwellenwert sind, um einen Ausgabesatz von Mehrwegverzögerungen zu erzeugen;
- computerlesbaren Programmcode, der so konfiguriert ist, dass er den zweiten Ausgabesatz von Mehrwegverzögerungen für einen RAKE-Empfänger bereitstellt.

33. Computerprogrammprodukt nach Anspruch 24, ferner umfassend:

- computerlesbaren Programmcode, der so konfiguriert ist, dass er die gemittelten SIR-Werte und/oder Leistungswerte mit einem Skalierungsfaktor multipliziert, um die gemittelten SIR-Werte und/oder Leistungswerte vor dem Auswählen jener Mehrwegverzögerungen aus dem Satz von Mehrwegverzögerungen und dem vorherigen Satz von Mehrwegverzögerungen zu reduzieren, die SIR-Werte und/oder Leistungswerte aufweisen, die höher als der Schwellenwert sind, um den überwachten Satz von Mehrwegverzögerungen zu erzeugen.

34. Computerprogrammprodukt nach Anspruch 24, wobei der computerlesbare Programmcode, der so konfiguriert ist, dass er jene Mehrwegverzögerungen aus dem Satz von Mehrwegverzögerungen und dem vorherigen Satz von Mehrwegverzögerungen auswählt, die SIR-Werte und/oder Leistungswerte aufweisen, die höher als der Schwellenwert sind, um den überwachten Satz von Mehrwegverzögerungen zu erzeugen, umfasst:

- computerlesbaren Programmcode, der so konfiguriert ist, dass er bestimmt, ob der Satz von Mehrwegverzögerungen und der vorherige Satz von Mehrwegverzögerungen irgendwelche gemeinsamen Mehrwegverzögerungen umfassen; und

- computerlesbaren Programmcode, der so konfiguriert ist, dass er mit jeweiligen der gemeinsamen Mehrwegverzögerungen einen maximalen SIR-Wert und/oder Leistungswert des SIR-Werts und/oder Leistungswerts, der mit jeweiligen der gemeinsamen Mehrwegverzögerungen im Satz von Mehrwegverzögerungen assoziiert ist, und des SIR-Werts und/oder Leistungswerts assoziiert, der mit jeweiligen der gemeinsamen Mehrwegverzögerungen im vorherigen Satz von Mehrwegverzögerungen assoziiert ist.

**35.** System nach Anspruch 13, umfassend eine elektronische Vorrichtung, die umfasst:

- ein Wegsuchermodul (100), das so konfiguriert ist, dass es eine Mehrzahl von Mehrwegen sucht, um einen Satz von Mehrwegverzögerungen auszuwählen, die mit den höchsten Signal/Störungs-Verhältnissen (SIR) und/oder Leistungswerten assoziiert sind;

- ein Verzögerungsentspreizungs- und SIR-Berechnungsmodul (101), das so konfiguriert ist, dass es die jeweiligen SIR-Werte und/oder Leistungswerte für die Mehrwegverzögerungen über ein Zeitintervall mittelt und die gemittelten SIR-Werte und/oder Leistungswerte mit einem Skalierungsfaktor multipliziert, um die gemittelten SIR-Werte und/oder Leistungswerte zu reduzieren;

- ein Verzögerungsauswahl- und -überwachungsmodul (102), das so konfiguriert ist, dass es jene Mehrwegverzögerungen aus dem Satz von Mehrwegverzögerungen und einem vorherigen Satz von Mehrwegverzögerungen auswählt, die SIR-Werte und/oder Leistungswerte aufweisen, die höher als ein Schwellenwert sind, um einen überwachten Satz von Mehrwegverzögerungen zu erzeugen, die SIR-Werte und/oder Leistungswerte filtert, die mit dem überwachten Satz von Mehrwegverzögerungen assoziiert sind, und mindestens eine Mehrwegverzögerung als mit einer anderen Mehrwegverzögerung des überwachten Satzes von Mehrwegverzögerungen korreliert aus dem überwachten Satz von Mehrwegverzögerungen eliminiert, um einen Ausgabesatz von Mehrwegverzögerungen zu erzeugen; und

- einen RAKE-Empfänger (103) mit Fingern, die auf der Basis des Ausgabesatzes von Mehrwegverzögerungen abgestimmt sind.

## Revendications

**1.** Procédé de sélection de retards pour les doigts d'un récepteur RAKE, comprenant de :

- chercher (500) une pluralité de multi trajets pour sélectionner un ensemble de retards multi trajets associé aux rapports signal sur interférence(SIRs) et/ou valeurs de puissance les plus élevés ;
- calculer la moyenne (505) des valeurs SIR et/ou valeurs de puissance respectives pour les retards multi trajets sur un intervalle de temps ;
- sélectionner (510) les retards multi trajets parmi l'ensemble de retards multi trajets et un ensemble précédent de retards multi trajets qui ont des valeurs SIR et/ou valeurs de puissance supérieures à une valeur seuil pour générer un ensemble surveillé de retards multi trajets ;
- filtrer (520) les valeurs SIR et/ou les valeurs de puissance associées à l'ensemble surveillé de retards multi trajets ;
- éliminer (530) au moins un retard multi trajet de l'ensemble surveillé de retards multi trajets comme étant corrélé avec un autre retard de multi trajet de l'ensemble surveillé de retards multi trajets pour générer un ensemble de sortie de retards multi trajets ; et
- fournir l'ensemble de sortie de retards multi trajets à un récepteur RAKE.

**2.** Procédé selon la revendication 1, dans lequel la recherche et le calcul de moyenne sont effectués pour une pluralité de cellules différentes.

**3.** Procédé selon la revendication 1, dans lequel sélectionner les retards multi trajets parmi l'ensemble de retards de multi trajets et l'ensemble précédent de retards multi trajets qui sont des valeurs SIR et/ou valeurs de puissance supérieures à la valeur seuil comprend de :

- sélectionner ces retards multi trajets parmi l'ensemble de retards multi trajets et l'ensemble précédent de retards multi trajets qui ont des valeurs SIR et/ou valeurs de puissance supérieures à la valeur seuil de sorte que les retards multi trajets sélectionnés soient associés à une pluralité de cellules.

**4.** Procédé selon la revendication 3, dans lequel la valeur seuil est une première valeur seuil et dans lequel sélectionner ces retards de multi trajets parmi l'ensemble de retards multi trajets et l'ensemble précédent de retards multi trajets qui ont des valeurs SIR et/ou valeurs de puissance supérieures à la première valeur seuil de sorte que les retards multi trajets sélectionnés soient associés à la pluralité de cellules comprend de :

- remplacer (210) un retard multi trajets associé à une première cellule qui a une valeur SIR et/ou valeur de puissance la plus petite associée avec un retard multi trajets associé à une seconde cellule qui a une valeur SIR et/ou valeur de puissance supérieure à une seconde valeur seuil.

5. Procédé selon la revendication 1, comprenant en outre de :

- étendre (300) l'ensemble surveillé de retards multi trajets en ajoutant les retards multi trajets à l'ensemble surveillé de retards multi trajets qui sont à l'intérieur d'un demi élément des retards existants de l'ensemble surveillé de retards multi trajets.

6. Procédé selon la revendication 5, comprenant en outre de :

- initialiser (305) les valeurs SIR et/ou les valeurs de puissance pour ces retards multi trajets ajoutés à l'ensemble surveillé de retards multi trajets pendant l'extension sur la base des valeurs SIR et/ou valeurs de puissance associées à l'ensemble précédent de retards multi trajets.

7. Procédé selon la revendication 5, comprenant en outre de :

- initialiser (305) les valeurs SIR et/ou les valeurs de puissance pour ces retards multi trajets ajoutés à l'ensemble surveillé de retards multi trajets pendant l'extension en utilisant un premier facteur d'échelonnement pour les retards respectifs des retards multi- trajets ajoutés qui ont des retards multi trajets voisins à la fois gauche et droite et en utilisant un second facteur d'échelonnement pour les retards respectifs des retards multi-trajets ajoutés qui ont seulement un retard multi-trajet voisin gauche ou droite.

8. Procédé selon la revendication 5, comprenant en outre de :

- initialiser (315) les valeurs SIR et/ou valeurs de puissance pour ces retards multi trajets ajoutés à l'ensemble surveillé de retards multi trajets pendant l'extension en utilisant un premier facteur d'échelonnement pour les retards multi trajets ajoutés respectifs qui ont des retards multi trajets voisins à la fois gauche et droite et sont à l'intérieur d'un quart d'élément d'un retard existant des retards multi trajets, utilisant un second facteur d'échelonnement pour les retards multi trajets ajoutés respectifs qui ont seulement un retard multi trajets voisin gauche ou droite et sont à l'intérieur d'un quart d'élément d'un retard existant des retards multi trajets, utilisant un troisième facteur d'échelonnement pour les retards multi trajets ajoutés respectifs qui ont des retards multi trajets voisins à la fois gauche et droite et sont éloignés entre un quatre d'élément et un demi élément d'un retard existant des retards multi trajets, et utilisant un quatrième facteur d'échelonnement pour les retards multi trajets ajoutés respectifs qui ont seulement un retard multi trajets voisin gauche ou droite et sont éloignés entre un quart d'élément et un demi élément d'un retard existant des retards multi trajets.

9. Procédé selon la revendication 1, dans lequel éliminer au moins un retard multi trajets de l'ensemble surveillé de retards multi trajets comprend de :

- réduire (405) les valeurs SIR et/ou valeurs de puissance associées aux retards sélectionnés de l'ensemble surveillé de retards multi trajets lors de leur corrélation avec d'autres retards de l'ensemble surveillé de retards multi trajets ; et
- éliminer les retards multi trajets de l'ensemble surveillé de retards multi trajets qui ont des valeurs SIR et/ou valeurs de puissance inférieures à la valeur seuil.

10. Procédé selon la revendication 1, dans lequel l'ensemble surveillé de retards multi trajets est un premier ensemble surveillé de retards multi trajets, la valeur seuil est une première valeur seuil, l'ensemble de sortie des retards multi trajets est un premier ensemble de sortie de retards multi trajets, et dans lequel le procédé comprend en outre de :

- sélectionner (510) les retards multi trajets de l'ensemble de sortie de retards multi trajets qui ont des valeurs SIR et/ou valeurs de puissance supérieures à la première valeur seuil pour générer un second ensemble surveillé de retards multi trajets ;

- étendre (300) le second ensemble surveillé de retards multi trajets en ajoutant des retards multi trajets au second ensemble surveillé de retards multi trajets qui sont à l'intérieur d'un demi élément des retards existants du second ensemble surveillé de retards multi trajets ;
- filtrer (520) les valeurs SIR et/ou valeurs de puissance associées au second ensemble surveillé de retards multi trajets ;
- sélectionner les retards multi trajets du second ensemble surveillé de retards multi trajets qui ont des valeurs SIR et/ou valeurs de puissance supérieures à une seconde valeur seuil pour générer un troisième ensemble surveillé de retards multi trajets ;
- éliminer (530)au moins un retard multi trajets du troisième ensemble surveillé de retards multi trajets comme étant corrélé avec un autre retard multi trajets du troisième ensemble surveillé de retards multi trajets pour générer un quatrième ensemble surveillé de retards multi trajets ;
- sélectionner les retards multi trajets du quatrième ensemble surveillé de retards multi trajets qui ont des valeurs SIR supérieures à la seconde valeur seuil pour générer un ensemble de sortie de retards multi trajets ; et
- fournir le second ensemble de sortie de retards multi trajets à un récepteur RAKE.

**11.** Procédé selon la revendication 1, comprenant en outre de :

- multiplier les moyennes des valeurs SIR et/ou valeurs de puissance par un facteur d'échelonnement de manière à réduire les moyennes des valeurs SIR et/ou valeur de puissance avant de sélectionner les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi trajets.

**12.** Procédé selon la revendication 1, dans lequel sélectionner les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi trajets comprend de :

- déterminer si l'ensemble de retards multi trajets et l'ensemble précédent de retards multi trajets inclut un quelconque retard multi trajets commun ; et
- associer aux retards respectifs des retards multi trajets communs une valeur SIR et/ou valeur de puissance maximale de la valeur SIR et/ou valeur de puissance associées aux retards respectifs des retards multi trajets communs dans l'ensemble de retards multi trajets et la valeur SIR et/ou valeur de puissance associée aux retards respectifs des retards multi trajets communs dans l'ensemble précédent de retards multi trajets.

**13.** Système de sélection de retards pour les doigts d'un récepteur RAKE, comprenant :

- un moyen (100) pour chercher une pluralité de multi trajets pour sélectionner un ensemble de retards multi trajets associé aux rapports signal sur interférence(SIRs) et/ou valeurs de puissance les plus élevés ;
- un moyen (101) pour calculer la moyenne des valeurs SIR et/ou valeurs de puissance respectives pour les retards multi trajets sur un intervalle de temps ;
- un moyen (102) pour sélectionner les retards multi trajets parmi l'ensemble de retards multi trajets et un ensemble précédent de retards multi trajets qui ont des valeurs SIR et/ou valeurs de puissance supérieures à une valeur seuil pour générer un ensemble surveillé de retards multi trajets ;
- un moyen (102) pour filtrer les valeurs SIR et/ou les valeurs de puissance associées à l'ensemble surveillé de retards multi trajets ;
- un moyen (102) pour éliminer au moins un retard multi trajet de l'ensemble surveillé de retards multi trajets comme étant corrélé avec un autre retard de multi trajet de l'ensemble surveillé de retards multi trajets pour générer un ensemble de sortie de retards multi trajets ; et
- un moyen pour fournir l'ensemble de sortie de retards multi trajets à un récepteur RAKE.

**14.** Système selon la revendication 13, dans lequel le moyen pour sélectionner les retards multi trajets de l'ensemble de retards multi trajets et de l'ensemble précédent de retards multi trajets qui ont des valeurs SIR et/ou valeurs de puissance supérieures à la valeur seuil comprend :

- un moyen pour sélectionner ces retards multi trajets parmi l'ensemble de retards multi trajets et l'ensemble précédent de retards multi trajets qui ont des valeurs SIR et/ou valeurs de puissance supérieures à la valeur seuil de sorte que les retards multi trajets sélectionnés soient associés à une pluralité de cellules.

23

**15.** Système selon la revendication 13, dans lequel la valeur seuil est une première valeur seuil, et dans lequel le moyen pour sélectionner ces retards multi trajets de l'ensemble de retards multi trajets et de l'ensemble précédent de retards multi trajets qui ont des valeurs SIR et/ou valeurs de puissance supérieures à la première valeur seuil de sorte que les retards multi trajets sélectionnées soient associés à la pluralité de cellules comprend :

- un moyen pour remplacer un retard multi trajets associé à une première cellule qui a une valeur SIR et/ou valeur de puissance la plus petite associée avec un retard multi trajets associé à une seconde cellule qui a une valeur SIR et/ou valeur de puissance supérieure à une seconde valeur seuil.

**16.** Système selon la revendication 13, comprenant en outre :

- un moyen pour étendre l'ensemble surveillé de retards multi trajets en ajoutant les retards multi trajets à l'ensemble surveillé de retards multi trajets qui sont à l'intérieur d'un demi élément des retards existants de l'ensemble surveillé de retards multi trajets.

**17.** Système selon la revendication 16, comprenant en outre :

- un moyen pour initialiser les valeurs SIR et/ou les valeurs de puissance pour ces retards multi trajets ajoutés à l'ensemble surveillé de retards multi trajets pendant l'extension sur la base des valeurs SIR et/ou valeurs de puissance associées à l'ensemble précédent de retards multi trajets.

**18.** Système selon la revendication 16, comprenant en outre :

- initialiser les valeurs SIR et/ou les valeurs de puissance pour ces retards multi trajets ajoutés à l'ensemble surveillé de retards multi trajets pendant l'extension en utilisant un premier facteur d'échelonnement pour les retards respectifs des retards multi- trajets ajoutés qui ont des retards multi trajets voisins à la fois gauche et droite et en utilisant un second facteur d'échelonnement pour les retards respectifs des retards multi-trajets ajoutés qui ont seulement un retard multi-trajet voisin gauche ou droite.

**19.** Système selon la revendication 16, comprenant en outre :

- initialiser les valeurs SIR et/ou valeurs de puissance pour ces retards multi trajets ajoutés à l'ensemble surveillé de retards multi trajets pendant l'extension en utilisant un premier facteur d'échelonnement pour les retards multi trajets ajoutés respectifs qui ont des retards multi trajets voisins à la fois gauche et droite et sont à l'intérieur d'un quart d'élément d'un retard existant des retards multi trajets, utilisant un second facteur d'échelonnement pour les retards multi trajets ajoutés respectifs qui ont seulement un retard multi trajets voisin gauche ou droite et sont à l'intérieur d'un quart d'élément d'un retard existant des retards multi trajets, utilisant un troisième facteur d'échelonnement pour les retards multi trajets ajoutés respectifs qui ont des retards multi trajets voisins à la fois gauche et droite et sont éloignés entre un quatre d'élément et un demi élément d'un retard existant des retards multi trajets, et utilisant un quatrième facteur d'échelonnement pour les retards multi trajets ajoutés respectifs qui ont seulement un retard multi trajets voisin gauche ou droite et sont éloignés entre un quart d'élément et un demi élément d'un retard existant des retards multi trajets.

**20.** Système selon la revendication 13, dans lequel le moyen pour éliminer au moins un retard multi trajets de l'ensemble surveillé de retards multi trajets comprend :

- un moyen pour réduire les valeurs SIR et/ou valeurs de puissance associées aux retards sélectionnés de l'ensemble surveillé de retards multi trajets lors de leur corrélation avec d'autres retards de l'ensemble surveillé de retards multi trajets ; et
- un moyen pour éliminer les retards multi trajets de l'ensemble surveillé de retards multi trajets qui ont des valeurs SIR et/ou valeurs de puissance inférieures à la valeur seuil.

**21.** Système selon la revendication 13, dans lequel l'ensemble surveillé de retards multi trajets est un premier ensemble surveillé de retards multi trajets, la valeur seuil est une première valeur seuil, l'ensemble de sortie de retards multi trajets est un premier ensemble de sortie de retards multi trajets et dans lequel le système comprend en outre :

- un moyen pour sélectionner les retards multi trajets de l'ensemble de sortie de retards multi trajets qui ont des valeurs SIR et/ou valeurs de puissance supérieures à la première valeur seuil pour générer un second ensemble surveillé de retards multi trajets ;

- un moyen pour étendre le second ensemble surveillé de retards multi trajets en ajoutant des retards multi trajets au second ensemble surveillé de retards multi trajets qui sont à l'intérieur d'un demi élément des retards existants du second ensemble surveillé de retards multi trajets ;

- un moyen pour filtrer les valeurs SIR et/ou valeurs de puissance associées au second ensemble surveillé de retards multi trajets ;

- un moyen pour sélectionner les retards multi trajets du second ensemble surveillé de retards multi trajets qui ont des valeurs SIR et/ou valeurs de puissance supérieures à une seconde valeur seuil pour générer un troisième ensemble surveillé de retards multi trajets ;

- un moyen pour éliminer au moins un retard multi trajets du troisième ensemble surveillé de retards multi trajets comme étant corrélé avec un autre retard multi trajets du troisième ensemble surveillé de retards multi trajets pour générer un quatrième ensemble surveillé de retards multi trajets ;

- un moyen pour sélectionner les retards multi trajets du quatrième ensemble surveillé de retards multi trajets qui ont des valeurs SIP supérieures à la seconde valeur seuil pour générer un ensemble de sortie de retards multi trajets ; et

- un moyen pour fournir le second ensemble de sortie de retards multi trajets à un récepteur RAKE.

**22.** Système selon la revendication 13, comprenant en outre :

- un moyen pour multiplier les moyennes des valeurs SIR et/ou valeurs de puissance par un facteur d'échelonnement de manière à réduire les moyennes des valeurs SIR et/ou valeur de puissance avant de sélectionnée les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi trajets.

**23.** Système selon la revendication 13, dans lequel le moyen pour sélectionner les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi-trajets comprend :

- un moyen pour déterminer si l'ensemble de retards multi trajets et l'ensemble précédent de retards multi trajets inclut un quelconque retard multi trajets commun ; et

- un moyen pour associer aux retards respectifs des retards multi trajets communs une valeur SIR et/ou valeur de puissance maximale de la valeur SIR et/ou valeur de puissance associées aux retards respectifs des retards multi trajets communs dans l'ensemble de retards multi trajets et la valeur SIR et/ou valeur de puissance associée aux retards respectifs des retards multi trajets communs dans l'ensemble précédent de retards multi trajets.

**24.** Produit de programme informatique pour sélectionner des retards pour des doigts d'un récepteur RAKE, comprenant :

- un support de mémorisation lisible par ordinateur contenant du code de programme lisible par ordinateur, le code de programme lisible par ordinateur comprenant:

- un code de programme lisible par ordinateur configuré pour rechercher une pluralité de multi trajets pour sélectionner un ensemble de retards multi trajets associés aux rapports signal sur interférence (Sirs) et/ou valeurs de puissance les plus élevés ;

- un code de programme lisible par ordinateur configuré pour calculer la moyenne des valeurs SIR et/ou valeurs de puissance respectives pour les retards multi trajets sur un intervalle de temps ;

- un code de programme lisible par ordinateur configuré pour sélectionner les retards multi trajets de l'ensemble de retards multi trajets et d'un ensemble précédent de retards multi trajets qui ont des valeurs SIR et/ou valeurs de puissance supérieures à une valeur seuil pour générer un ensemble surveillé de retards multi trajets ;

- un code de programme lisible par ordinateur configuré pour filtrer les valeurs SIR et/ou valeurs de puissance associées à l'ensemble surveillé de retards multi trajets ;

- un code de programme lisible par ordinateur configuré pour éliminer au moins un retard multi trajets de l'ensemble surveillé de retards multi trajets comme étant corrélé avec un autre retard multi trajets de l'ensemble surveillé de retards multi trajets pour générer un ensemble de sortie de retards multi trajets ; et

- un code de programme lisible par ordinateur configuré pour fournir l'ensemble de sortie de retards multi trajets à un récepteur RAKE.

**25.** Produit de programme informatique selon la revendication 24, dans lequel le code de programme lisible par ordinateur configuré pour sélectionner les retards multi trajets de l'ensemble de retards multi trajets et de l'ensemble précédent de retards multi trajets qui ont des valeurs SIR et/ou valeurs de puissances supérieures à la valeur seuil comprend :

- un code de programme lisible par ordinateur configuré pour sélectionner ces retards multi trajets parmi l'ensemble de retards multi trajets et l'ensemble précédent de retards multi trajets qui ont des valeurs SIR et/ou valeurs de puissance supérieures à la valeur seuil de sorte que les retards multi trajets sélectionnés soient associés à une pluralité de cellules.

**26.** Produit de programme informatique selon la revendication 24, dans lequel la valeur seuil est une première valeur seuil, et dans lequel le code de programme lisible par ordinateur configuré pour sélectionner les retards multi trajets de l'ensemble de retards multi trajets et de l'ensemble précédent de retards multi trajets qui ont des valeurs SIR et/ou valeurs de puissance supérieures à la première valeur seuil de sorte que les retards multi trajets sélectionnés soient associés à la pluralité de cellules comprend :

- un code de programme lisible par ordinateur configuré pour remplacer un retard multi trajets associé à une première cellule qui a une valeur SIR et/ou valeur de puissance la plus petite associée avec un retard multi trajets associé à une seconde cellule qui a une valeur SIR et/ou valeur de puissance supérieure à une seconde valeur seuil.

**27.** Produit de programme informatique selon la revendication 24, comprenant en outre :

- un code de programme lisible par ordinateur configuré pour étendre l'ensemble surveillé de retards multi trajets en ajoutant les retards multi trajets à l'ensemble surveillé de retards multi trajets qui sont à l'intérieur d'un demi élément des retards existants de l'ensemble surveillé de retards multi trajets.

**28.** Produit de programme informatique selon la revendication 27, comprenant en outre :

- un code de programme lisible par ordinateur configuré pour initialiser les valeurs SIR et/ou les valeurs de puissance pour ces retards multi trajets ajoutés à l'ensemble surveillé de retards multi trajets pendant l'extension sur la base des valeurs SIR et/ou valeurs de puissance associées à l'ensemble précédent de retards multi trajets.

**29.** Produit de programme informatique selon la revendication 27, comprenant en outre :

- un code de programme lisible par ordinateur configuré pour initialiser les valeurs SIR et/ou les valeurs de puissance pour ces retards multi trajets ajoutés à l'ensemble surveillé de retards multi trajets pendant l'extension en utilisant un premier facteur d'échelonnement pour les retards respectifs des retards multi- trajets ajoutés qui ont des retards multi trajets voisins à la fois gauche et droite et en utilisant un second facteur d'échelonnement pour les retards respectifs des retards multi-trajets ajoutés qui ont seulement un retard multi-trajet voisin gauche ou droite.

**30.** Produit de programme informatique selon la revendication 27, comprenant en outre :

- un code de programme lisible par ordinateur configuré pour initialiser les valeurs SIR et/ou valeurs de puissance pour ces retards multi trajets ajoutés à l'ensemble surveillé de retards multi trajets pendant l'extension en utilisant un premier facteur d'échelonnement pour les retards multi trajets ajoutés respectifs qui ont des retards multi trajets voisins à la fois gauche et droite et sont à l'intérieur d'un quart d'élément d'un retard existant des retards multi trajets, utilisant un second facteur d'échelonnement pour les retards multi trajets ajoutés respectifs qui ont seulement un retard multi trajets voisin gauche ou droite et sont à l'intérieur d'un quart d'élément d'un retard existant des retards multi trajets, utilisant un troisième facteur d'échelonnement pour les retards multi trajets ajoutés respectifs qui ont des retards multi trajets voisins à la fois gauche et droite et sont éloignés entre un quatre d'élément et un demi élément d'un retard existant des retards multi trajets, et utilisant un quatrième facteur d'échelonnement pour les retards multi trajets ajoutés respectifs qui ont seulement un retard multi trajets voisin gauche ou droite et sont éloignés entre un quart d'élément et un demi élément d'un retard existant des retards multi trajets.

**31.** Produit de programme informatique selon la revendication 24, dans lequel le code de programme lisible par ordinateur configuré pour éliminer au moins un retard multi trajets de l'ensemble surveillé de retards multi trajets comprend :

- un code de programme lisible par ordinateur configuré pour réduire les valeurs SIR et/ou valeurs de puissance associées aux retards sélectionnés de l'ensemble surveillé de retards multi trajets lors de leur corrélation avec d'autres retards de l'ensemble surveillé de retards multi trajets ; et
- un code de programme lisible par ordinateur configuré pour éliminer les retards multi trajets de l'ensemble surveillé de retards multi trajets qui ont des valeurs SIR et/ou valeurs de puissance inférieures à la valeur seuil.

32. Produit de programme informatique selon la revendication 24, dans lequel l'ensemble surveillé de retards multi trajets est un premier ensemble surveillé de retards multi trajets, la valeur seuil est une première valeur seuil, l'ensemble de sortie de retards multi trajets est un premier ensemble de sortie de retards multi trajets, et dans lequel le système comprend en outre :

- un code de programme lisible par ordinateur configuré pour sélectionner les retards multi trajets de l'ensemble de sortie de retards multi trajets qui ont des valeurs SIR et/ou valeurs de puissance supérieures à la première valeur seuil pour générer un second ensemble surveillé de retards multi trajets ;
- un code de programme lisible par ordinateur configuré pour étendre le second ensemble surveillé de retards multi trajets en ajoutant des retards multi trajets au second ensemble surveillé de retards multi trajets qui sont à l'intérieur d'un demi élément des retards existants du second ensemble surveillé de retards multi trajets ;
- un code de programme lisible par ordinateur configuré pour filtrer les valeurs SIR et/ou valeurs de puissance associées au second ensemble surveillé de retards multi trajets ;
- un code de programme lisible par ordinateur configuré pour sélectionner les retards multi trajets du second ensemble surveillé de retards multi trajets qui ont des valeurs SIR et/ou valeurs de puissance supérieures à une seconde valeur seuil pour générer un troisième ensemble surveillé de retards multi trajets ;
- un code de programme lisible par ordinateur configuré pour éliminer au moins un retard multi trajets du troisième ensemble surveillé de retards multi trajets comme étant corrélé avec un autre retard multi trajets du troisième ensemble surveillé de retards multi trajets pour générer un quatrième ensemble surveillé de retards multi trajets ;
- un code de programme lisible par ordinateur configuré pour sélectionner les retards multi trajets du quatrième ensemble surveillé de retards multi trajets qui ont des valeurs SIP supérieures à la seconde valeur seuil pour générer un ensemble de sortie de retards multi trajets ; et
- un code de programme lisible par ordinateur configuré pour fournir le second ensemble de sortie de retards multi trajets à un récepteur RAKE.

33. Produit de programme informatique selon la revendication 24, comprenant en outre :

- un code de programme lisible par ordinateur configuré pour multiplier les moyennes des valeurs SIR et/ou valeurs de puissance par un facteur d'échelonnement de manière à réduire les moyennes des valeurs SIR et/ou valeur de puissance avant de sélectionnée les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi trajets.

34. Produit de programme informatique selon la revendication 24, dans lequel le code de programme lisible par ordinateur configuré pour sélectionner les retards multi trajets de l'ensemble de retards multi trajets et de l'ensemble précédent de retards multi trajets qui ont des valeurs SIR et/ou valeurs de puissance supérieures à la valeur seuil pour générer l'ensemble surveillé de retards multi trajets comprend :

- un code de programme lisible par ordinateur configuré pour déterminer si l'ensemble de retards multi trajets et l'ensemble précédent de retards multi trajets inclut un quelconque retard multi trajets commun ; et
- un code de programme lisible par ordinateur configuré pour associer aux retards respectifs des retards multi trajets communs une valeur SIR et/ou valeur de puissance maximale de la valeur SIR et/ou valeur de puissance associées aux retards respectifs des retards multi trajets communs dans l'ensemble de retards multi trajets et la valeur SIR et/ou valeur de puissance associée aux retards respectifs des retards multi trajets communs dans l'ensemble précédent de retards multi trajets.

35. Système selon la revendication 13, comprenant un dispositif électronique, comprenant :

- un module chercheur de trajet (100) qui est configuré pour chercher une pluralité de multi trajets afin de sélectionner un ensemble de retards multi trajets associés aux rapports signal sur interférence (SIRs) et/ou valeurs de puissance les plus élevés ;
- un module de désétalement de retard et de calcul de SIR (101) qui est configurer pour calculer la moyenne des valeurs SIR et/ou valeurs de puissance respectives pour les retards multi trajets sur un intervalle de temps et pour multiplier les moyennes des valeurs SIR et/ou valeurs de puissance par un facteur d'échelonnement de manière à réduire les moyennes des valeurs SIR et/ou valeurs de puissance ;

- un module de sélection de retard et de surveillance (102) qui est configuré pour sélectionner les retards multi trajets de l'ensemble de retards multi trajets et d'un ensemble précédent de retards multi trajets qui ont des valeurs SIR et/ou valeurs de puissance supérieures à une valeur seuil pour générer un ensemble surveillé de retards multi trajets, filtrer les valeurs SIR et/ou valeurs de puissance associées à l'ensemble surveillé de retards multi trajets, éliminer au moins un retard multi trajets de l'ensemble surveillé de retards multi trajets comme étant corrélé avec un autre retard multi trajets de l'ensemble surveillé de retards multi trajets pour générer un ensemble de sortie de retards multi -trajets ; et

- un récepteur RAKE (103) ayant des doigts accordés sur la base de l'ensemble de sortie de retards multi trajets.

10

Path Searcher
100

Delay Despreading
and
SIR Calculation
101

Delay Selection
and
Delay Monitoring
102

RAKE
103

Spread Data

Channel Estimator
104

Combiner
105

Despread Symbols

FIG. 1

Begin

Select subset $S_F$ of F delays that have the largest SIR values that are at least $100T_F\%$ above a defined SIR value — 200

All delays in $S_F$ come from cell one? — 205

Yes

No

If delay from cell two has SIR value that is at least $100\tau_{cell}\%$ above defined SIR value then remove delay from $S_F$ that has lowest SIR value and replace with delay with highest SIR value from cell two, but ensure that $S_F$ has at least one delay from cell one — 210

All delays in $S_F$ come from cells one and two? — 215

Yes

No

If delay from cell three has SIR value that is at least $100\tau_{cell}\%$ above defined SIR value then remove delay from $S_F$ that has lowest SIR value and replace with delay with highest SIR value from cell three, but ensure that $S_F$ has at least one delay from each of cells one and two — 220

End

FIG. 2

FIG. 3A

Begin

Add delays half a chip to the left and right for each of the current delays to $S_F$ — 300

Initialize SIR values based on previous values and scaling factors $\tau_{Net\_0}$ and $\tau_{Net\_1}$ — 305

End

FIG. 3B

Begin

Add delays a quarter of a chip and half a chip to the left and right for each of the current delays to $S_F$ — 310

Initialize SIR values based on previous values and scaling factors $\tau_{Net\_0}$, $\tau_{Net\_1}$, $\tau_{Net\_2}$, and $\tau_{Net\_3}$ — 315

End

Begin

Identify delays in $S_f$ that are correlated to one another — 400

Select the $N_{mod}$ identified delays with the largest SIR values and reduce their SIR values to be $100\tau_{red}\%$ of their previous values — 405

End

FIG. 4A

Begin

Identify delays in $S_f$ that are correlated to one another — 410

Select the $N_{mod}$ identified delays with the largest SIR values and reduce their SIR values to be $100\tau_{red\_0}\%$ or $100\tau_{red\_1}\%$ of their previous values depending on whether they are quarter chip or half chip neighbors of another delay — 415

End

FIG. 4B

FIG. 5

| | Path searcher is active. |
| | The SIR values are estimated for the newly found path searcher delays. |
| | The SIR values are estimated for the chosen delays. |

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2366970 A

### Non-patent literature cited in the description

- The Mobile Communications Handbook. CRC Press, 1996